# FASCICULE DE BREVET EUROPEEN

(11) **EP 1 726 124 B1**
(45) Date de publication et mention de la délivrance du brevet: **22.08.2007**
(21) Numéro de dépôt: 05732976.5
(22) Date de dépôt: 25.02.2005
(51) Int. Cl.: H04L 12/24, H04L 29/08

(54) **SYSTEME ET PROCEDE DE CONTROLE D'EQUIPEMENTS A DISTANCE A L'AIDE DE COMMANDES AT, DISPOSITIF, MODULE DE RADIOCOMMUNICATION ET PROGRAMME CORRESPONDANTS**
SYSTEM UND VERFAHREN ZUR FERNÜBERWACHUNG VON GERÄTEN MIT HILFE EINES STEUER-, EINRICHTUNGS-, FUNKKOMMUNIKATIONSMODULS UND ENTSPRECHENDES PROGRAMM
SYSTEM AND METHOD FOR REMOTELY MONITORING EQUIPMENT WITH THE AID OF AT CONTROL, DEVICE, RADIOCOMMUNICATIONS MODULE AND CORRESPONDING PROGRAM

(30) Priorité: 15.03.2004 FR 0402670
(43) Date de publication de la demande: 29.11.2006
(73) Titulaire: Wavecom, 92442 Issy-les-Moulineaux Cedex (FR)
(72) Inventeur: LESREL, Sébastien, F-75020 Paris (FR)
(74) Mandataire: Bioret, Ludovic
(86) Numéro de dépôt international: PCT/FR2005/000463
(87) Numéro de publication internationale: WO 2005/101739

(56) Documents cités:
- US-A1- 2003 104 802
- US-A1- 2004 010 561

## Description

Le domaine de l'invention est celui du contrôle à distance d'équipements, et notamment d'équipements limités en ressources de traitement de données. Ainsi, l'invention s'applique par exemple aux systèmes de relevé de données à distance, par exemple sur des compteurs d'eau, de gaz ou d'électricité, et plus généralement aux systèmes de télémétrie, de suivi de commandes, et plus généralement encore de contrôle de machines (en anglais « M to M : machine to machine »).

Il existe déjà diverses solutions pour réaliser de telles opérations. Elles ont généralement été développées de façon spécifique pour une application donnée. En d'autres termes, il s'agit de solutions « propriétaires », qui sont difficilement adaptables à d'autres applications.

On connaît par ailleurs un protocole, développé par les sociétés IBM et ARCOM Control Systems (marques déposées), connu sous le nom de technologie « MQIsdp Messaging ». Cette technique propose un protocole de communication entre un ou plusieurs équipements limités en ressources, et un ou plusieurs serveurs (« brokers » en anglais), en utilisant un lien TCP/IP.

Cependant, même avec ce protocole spécifique, il est nécessaire d'adjoindre aux équipements des moyens de traitement spécifiques (microprocesseurs, mémoires, ...), qui permettent d'instaurer le dialogue avec ces serveurs distants, selon le format MQIsdp requis. La liaison entre l'équipement et le serveur peut utiliser une liaison de type téléphonique, à l'aide d'un modem.

Dans de nombreuses applications, il serait cependant souhaitable de pouvoir se passer d'une liaison téléphonique filaire. On peut alors envisager la mise en oeuvre de moyens de radiocommunication, par exemple selon la norme GSM ou GPRS.

Ainsi, la Société Orange (marque déposée) a présenté un service, sous le terme « M2M Connect » (marque déposée), défini notamment dans les documents de spécification « Orange M2M Protocol Definition ». Ce service se présente sous la forme d'une solution prête à l'emploi, offrant des fonctions de communication, de surveillance et de niveau de service.

Dans ce cas, on utilisera un équipement de radiotéléphonie pour assurer la fonction de modem. Cependant, il reste nécessaire, selon l'art antérieur, d'associer à l'équipement des moyens spécifiques et propriétaires de traitement de données pour établir et réaliser l'échange de données avec le serveur.

Ainsi, dans le cas du service « M2M Connect », les terminaux distants doivent disposer de moyens importants pour gérer une communication (par exemple en GPRS), pour construire des messages en un format acceptable par les serveurs distants, et le cas échéant pour gérer la compression de ces messages. Une application spécifique doit donc être développée et associée à chaque terminal, ce qui est généralement incompatible avec une exigence de coût réduit et de simplicité pour ces derniers (par exemple lorsqu'il s'agit de compteurs électriques, diffusés en très grande quantité).

Cet aspect est une limitation très importante au développement des applications mentionnées ci-dessus, et de nombreuses autres applications que permet d'envisager cette technique.

L'invention a notamment pour objectif de pallier cet inconvénient de l'art antérieur.

Il convient de noter que le fait d'identifier ce problème est en soi une partie de l'invention. En effet, l'homme du métier est persuadé qu'il est absolument nécessaire d'équiper les équipements terminaux de moyens de traitement suffisants, et ne peut en aucun cas envisager qu'il est possible de les réduire, voire de les supprimer.

C'est pourtant un objectif de l'invention que de permettre de simplifier les traitements nécessaires du côté des équipements, et d'éviter que ceux-ci doivent disposer de moyens complexes et coûteux tels qu'un microprocesseur.

Un autre objectif de l'invention est de proposer une technique simple et générique, permettant d'instaurer facilement et efficacement un dialogue entre un terminal distant à « intelligence limitée » et un serveur selon un protocole de haut niveau, compris par ce serveur.

Encore un autre objectif de l'invention est de fournir une telle technique, permettant d'établir une liaison entre des serveurs et des équipements par voie radiotéléphonique, de façon simple, standardisée et peu coûteuse.

L'invention a également pour objectif de fournir une telle technique, permettant de développer un nombre important d'applications, sans qu'il soit nécessaire de développer des applications spécifiques à chaque fois.

Un autre objectif de l'invention est de fournir une telle technique, ne nécessitant pas une connaissance du protocole et/ou du format de données utilisé dans les applications développées.

Encore un autre objectif de l'invention est de fournir une telle technique, qui est à la fois techniquement simple et évolutive, et adaptable à diverses situations (par exemple pour la taille des données à échanger) et aux éventuelles évolutions futures.

Ces objectifs, ainsi que d'autres qui apparaîtront plus clairement par la suite, sont atteints à l'aide d'un système de contrôle d'équipements à distance, permettant l'interconnexion entre au moins un serveur et au moins un équipement distant selon un protocole prédéterminé.

Selon l'invention, ce système associe à au moins un desdits équipements distants des moyens de radiocommunication capables d'émettre et de recevoir des commandes de type AT émises par et/ou destinées à une application externe mise en oeuvre par ledit équipement distant, et lesdits moyens de radiocommunication sont dotés d'un jeu de commandes AT spécifiques permettant de gérer des échanges de données entre ledit équipement distant et au moins un serveur mettant en oeuvre ledit protocole prédéterminé, au moins une desdites commandes AT permettant auxdits moyens de radiocommunication de créer, de modifier et/ou d'envoyer des pages au format XML, de façon à permettre une interconnexion entre le ou lesdits serveurs et le ou lesdits équipements distants via lesdits moyens de radiocommunication par transmission de pages au format XML, sans nécessiter de connaissance dudit protocole prédéterminé ni du format XML dans lesdits équipements distants.

Ainsi, il est possible de gérer aisément et simplement des échanges de données, sans qu'il soit nécessaire de développer des applications spécifiques ni d'associer des moyens importants (microprocesseur et mémoire notamment) à un terminal.

Ni ce dernier, ni l'application associée, n'a besoin de connaître le protocole utilisé par le serveur, ni le format XML. Ce sont les moyens de radiocommunication qui gèrent ces aspects. Les seules connaissances nécessaires, vu de l'application et donc du terminal, sont les nouvelles commandes AT de l'invention (qui peuvent, comme on le verra par la suite, être en nombre relativement réduit).

Selon une caractéristique avantageuse de l'invention, au moins une desdites commandes AT permet la compression de données à transmettre. Ladite compression peut notamment mettre en oeuvre le format de compression WBXML.

De façon avantageuse, au moins dans un premier mode de transmission, lesdites données sont transmises sur un canal dédié aux messages courts (SMS). Préférentiellement, au moins dans un second mode de transmission, lesdites données sont transmises sur un canal GPRS.

Dans ledit second mode de fonctionnement, le système de l'invention met en oeuvre de façon avantageuse un protocole « peer-to-peer », utilisant le protocole TCP, et par exemple le protocole BEEP.

Avantageusement, le système de l'invention comprend des moyens de mise en oeuvre, dans un premier mode de fonctionnement, d'un service d'envoi et/ou de réception automatique d'au moins un message XML stocké dans lesdits moyens de radiocommunication, à réception d'un message de réveil.

Cela permet de simplifier efficacement le traitement.

Ainsi, le système peut prévoir quatre modes de fonctionnement :
- mode automatique, dans lequel il gère de façon autonome une transaction ;
- mode manuel, dans lequel une transaction doit être initiée par une application distante ;
- mode entrée automatique / sortie manuelle, dans lequel seuls les messages entrants sont traités automatiquement ;
- mode entrée manuelle / sortie automatique, dans lequel un message est envoyé automatiquement.

De façon préférentielle, l'invention met en oeuvre des pages XML simplifiées, comprenant uniquement :
- des noms de balise (« tag names ») ;
- des noms d'attribut (« attribute names ») ;
- des valeurs d'attribut (« attribute values ») ; et/ou
- des données.

Selon un aspect préférentiel de l'invention, ledit protocole prédéterminé est un protocole mis en oeuvre dans le cadre d'un service mettant un oeuvre un langage de description données XML, un algorithme de compression desdites données WBXML, une première méthode d'accès à au moins un serveur via GPRS et une seconde méthode d'accès à un second serveur via SMS. Il peut notamment s'agir du service « M2M Connect» développé par la Société Orange (marque déposée).

Avantageusement, lesdits moyens de radiocommunication intègrent ledit protocole sous la forme d'une application « Open-AT », définissant ledit jeu de commandes AT spécifiques.

Ledit jeu de commandes AT spécifiques comprend préférentiellement des commandes permettant :
- la connexion à un desdits serveurs ;
- l'envoi de messages ;
- la réception de messages.

De façon préférentielle, au moins certaines desdites commandes AT spécifiques sont organisées de façon à pouvoir assurer au moins deux fonctions et/ou agir sur au moins deux aspects distincts, en fonction d'un paramétrage prédéfini.

Cela permet de réduire fortement le nombre de commandes nécessaires, tout en assurant toutes les opérations nécessaires et en permettant de prendre en compte d'éventuelles évolutions futures.

Ainsi, dans un mode de réalisation préférentiel, ledit jeu de commandes comprend uniquement 8 commandes.

De façon avantageuse, ledit jeu de commandes AT spécifiques comprend au moins une commande de configuration permettant de définir les paramètres de la communication avec un desdits serveurs.

Préférentiellement, il met en oeuvre une unique commande de configuration (+M2MGSET) pour la configuration générale des aspects liés audit protocole et/ou audit service.

Ladite commande de configuration peut notamment permettre de sélectionner un mode de transmission parmi au moins deux (SMS et GPRS).

Avantageusement, adite commande de configuration permet également de sélectionner un mode de fonctionnement parmi au moins deux, un mode de fonctionnement automatique et un mode de fonctionnement manuel.

Dans ce cas, ladite commande de configuration peut encore être utiliser pour régler un délai pour la prise en charge d'un message, dans ledit mode de fonctionnement automatique.

Selon un autre aspect de l'invention, on met en oeuvre au moins trois commandes de configuration :
- une commande de configuration générale des aspects liés audit protocole et/ou audit service (+M2MGSET) ;
- une commande de configuration d'une connexion (+M2MCSET), permettant de préciser notamment les coordonnées d'un serveur ;
- une commande de configuration du message de configuration d'une table pour la mise en oeuvre d'un analyseur syntaxique pour la compression (+M2MWBXML) .

Selon une caractéristique avantageuse de l'invention, on prévoit :
- au moins dans un premier mode, lesdits moyens de radiocommunication gèrent uniquement la signalisation d'un échange de données, lesdites données étant transférées directement d'un équipement distant vers un serveur, ou inversement ; et/ou
- au moins dans un second mode, lesdits moyens de radiocommunication gèrent la signalisation d'un échange de données et le transfert desdites données, ces dernières étant temporairement stockées dans au moins une mémoire tampon.

Avantageusement, dans ce cas, caractérisé en ce que la taille de la ou desdites mémoires tampon est paramétrable. On prévoit avantageusement que le système fonctionne dans ledit premier mode lorsque la taille de la ou desdites mémoires tampon vaut 0, et dans ledit second mode sinon.

On obtient ainsi un moyen simple et efficace pour réaliser deux fonctions (choix du mode et dimensionnement des files d'attente par exemple) avec une commande unique.

Préférentiellement, on met en oeuvre au moins une commande générale de communication, permettant l'émission et/ou la réception de messages selon ledit protocole prédéterminé.

Notamment, on peut prévoir au moins cinq commandes générales de communication :
- une commande de gestion d'une connexion avec un serveur (+M2MCONM) ;
- une commande d'envoi d'un message (+M2MSMSG) ;
- une commande de création et/ou de modification d'un message XML (+M2MCMSG) ;
- une commande de réception d'un message (+M2MRMSG) ;
- une commande d'administration, permettant une mise à zéro et/ou un retour aux valeurs par défaut d'un ensemble de paramètres (+M2MPA).

L'invention comprend avantageusement une commande de création et/ou de modification d'un message XML (+M2MCMSG) permettant d'effectuer au moins certaines des opérations suivantes :
- démarrage de la création d'un message XML dans un tampon de sortie ;
- écriture d'un indicateur de début ;
- écriture d'un attribut ;
- écriture de données ;
- écriture d'un indicateur de fin ;
- fin de création d'une page ;
- modification d'une valeur d'un attribut ;
- modification d'une valeur d'une données,
un paramètre permettant de déterminer le type d'opération à laquelle est affectée ladite commande de création et/ou de modification.

Selon un autre aspect avantageux, on met en oeuvre au moins une commande d'interrogation par une application externe, et préférentiellement quatre commandes d'interrogation par une application externe dans un desdits équipements distants, respectivement sur :
- l'état courant de la connexion (+M2MCONI) ;
- l'envoi d'un message (+M2MSMSGI) ;
- la réception d'un message (+M2MRMSGI) ;
- l'analyse syntaxique (« parse ») d'un message (+M2MPMSGI).

L'invention concerne également un procédé de contrôle d'équipements à distance, permettant l'interconnexion entre au moins un serveur et au moins un équipement distant selon un protocole prédéterminé, dans un système tel que décrit ci-dessus.

L'invention concerne encore les dispositifs de radiocommunication et les modules de radiocommunication comprenant des moyens de radiocommunication mis en oeuvre dans un tel système de contrôle d'équipements à distance.

L'invention concerne également les programmes informatiques comprenant des instructions de programmation permettant la mise en oeuvre de commandes de type AT dans un équipement distant et/ou dans des moyens de radiocommunication d'un système de contrôle d'équipements à distance tel que décrit ci-dessus.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :
- la figure 1 illustre un exemple de système dans lequel l'invention peut être mise en oeuvre ;
- la figure 2 est un exemple d'intégration de l'invention dans une application Open-AT ;
- la figure 3 illustre un exemple de mise en oeuvre d'une connexion selon l'invention.

### 1. principes de l'invention

### 1.1 généralités

L'invention concerne donc une nouvelle approche du contrôle d'équipements à distance, reposant notamment sur la mise en oeuvre d'un jeu de commandes spécifiques de type AT, permettant à une application externe de gérer des échanges de données entre un terminal distant et un serveur, via des moyens de radiocommunication (par exemple un module de type Wismo (marque déposée) distribué par le déposant de la présente demande de brevet), sans que l'application connaisse le protocole mis en oeuvre par le serveur ni le format XML. Ce sont les moyens de radiocommunication qui gèrent cet aspect, et par exemple les acquittements, la mise en forme des messages et leur compression éventuelle.

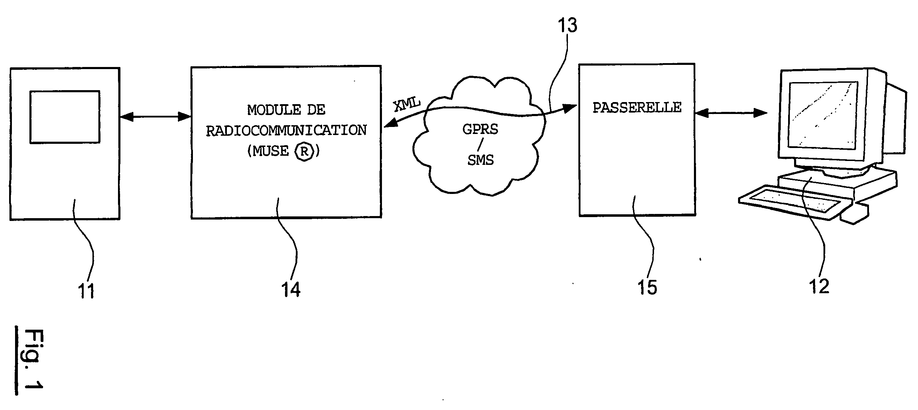

La figure 1 illustre de façon simplifiée le principe de l'invention. L'objectif est de faire communiquer tout type de machines distantes, par exemple des instruments de mesure (compteurs) 11, avec une ou plusieurs applications hébergées par des serveurs 12, via une passerelle 15 (« gateway ») gérée par l'opérateur téléphonique, capables de recevoir des données XML 13 selon au moins un protocole prédéterminé, et de les transformer, traiter ou transmettre.

Selon l'invention, on associe aux terminaux (ou machines) distants 11 des moyens de radiocommunication 14, par exemple sous la forme d'un module Wismo (marque déposée), embarquant notamment les outils de développement distribués par le déposant sous la marque « Muse platform ».

### 1.2 Présentation générale du protocole

Dans le mode de réalisation préférentiel décrit par la suite, le système de l'invention est prévu pour le service « Orange M2M Connect » (marque déposée).

Le produit « Orange M2M Connect » est une solution prête à l'emploi offrant des fonctions de communication, de surveillance et de niveau de service. Ce produit est fourni sous forme de coffret pour télémétrie.

Selon l'invention, les produits (modules notamment) Wavecom (marque déposée) offrent des options pouvant être utilisées avec le protocole « Orange M2M Connect » :
- Prise en charge des messages XML : le module est capable de créer et d'analyser des messages XML légers ;
- Prise en charge WBXML : cette option permet de comprimer des données avant la transmission, améliorant ainsi l'utilisation du canal SMS ;
- Protocole BEEP: il s'agit d'un protocole équilibré initialement conçu pour le monde informatique (PC). « M2M Connect » ne nécessite que l'utilisation d'une partie simple dans son système exécuté sur le prococole TCP.

Ce protocole définit la communication entre des terminaux distants (« terminaux ») et le système « M2M Telemetry » (« le système »). Les messages peuvent être ensuite rassemblés par les systèmes hôtes (ou « serveurs ») en utilisant un protocole HTTP via une passerelle M2M.

Schématiquement, les terminaux distants communiquent avec le système hôte, par l'intermédiaire du réseau GPRS, et le système, qui fait office de mécanisme de stockage et d'acheminement. Le système fournit également l'aspect de contrôle de protocole.

Le protocole SmartBeep est un protocole d'application, qui définit une communication entre une application exécutée sur un terminal distant et l'application système. SmartBeep est basé sur le logiciel intégré Beep. Le protocole SmartBeep utilise l' « API BeepCore » qui fournit le support du protocole TCP à un niveau inférieur, mais la plupart de ces opérations sont masquées pour le développeur d'applications.

Le processus général de communication prend la forme d'une transaction d'échanges, dont les différents stades sont définis comme suit :
- Le terminal commence par lancer un appel à la station de base GPRS. Il s'agit de négocier avec le réseau GPRS qui est responsable de l'authentification et qui définit également le IP/port pour le terminal et le IP/port du système dont le terminal a besoin pour communiquer avec le suivant. Ce sera l'adresse du serveur hébergeant le système M2M.
- Le terminal ouvre le IP/port spécifié et établit une session TCP avec le système M2M.
- Le terminal peut demander à commencer un téléchargement de tout message entrant en attente de regroupement au niveau de la passerelle. La passerelle ouvre un nouveau canal de données et envoie chaque message sous forme de message SmartBeep individuel. Le terminal doit accuser réception de chaque message en envoyant un message de réponse au système. Lorsque le système a fini d'envoyer tous les messages, un message « No More Messages » (plus de messages) est envoyé au terminal. Le terminal accuse réception du message « No More Messages » (plus de messages) et le système ferme le canal de liaison descendante.
- Le terminal rapatrie tous les messages sortants du système, les envoie sous forme de messages SmartBeep individuels. Le système accuse réception de chaque message en envoyant un message de réponse au terminal. Lorsque le terminal a fini d'envoyer tous les messages, un message « No More Messages » est envoyé au système.
- Le système accuse réception du message "plus de messages" et considère que la communication est terminée.
- Le terminal met fin à sa connexion au réseau GPRS.

Dans le cadre de l'invention, ces opérations sont assurées par les moyens de radiocommunication (module) et non directement par le terminal distant.

### 1.3 Remarques sur les messages XML

La solution « Orange M2M Connect » utilise des documents XML bien adaptés pour envoyer, recevoir et gérer les données.

Pour manipuler facilement ces documents XML, l'interface des commandes AT selon l'invention propose plusieurs commandes pour analyser les documents reçus et faciliter la création et la modification des documents XML à envoyer.

Un document XML, dans le cas du présent mode de réalisation, est très simple. Il ne peut contenir que des noms de balises, des noms d'attribut, des valeurs et des données d'attribut. Il ne peut contenir ni commentaires, ni DTD, ni partie de validation schéma (« Schema validation »).

Par exemple, un document XML peut avoir la forme suivante :

```
   <m2m>
      <servlet>
         <servlet-name>test 1</servlet-name>
         <servlet-class>test 2</servlet-class>

         <init-param>
            <param-name id="0.1">test 3</param-name>
            <param-value>test 4</param-value>
            <description name="Thing">test 5</description>
         </init-param>

         <load-on-startup>1</load-on-startup>
      </servlet>
      <foo>
         <bar>test 6</bar>
         <gservlet-class>test 7</gservlet-class>
      </foo>
   </m2m>
```

### 1.4 Notion de module

Pour mémoire, on rappelle que la plupart des dispositifs de radiocommunication comprennent, de façon classique, un ensemble de composants électroniques implantés sur un circuit imprimé. Ces différents composants ont pour but d'assurer les différentes fonctions nécessaires, depuis la réception d'un signal RF jusqu'à la génération d'un signal audible (dans le cas d'un radio-téléphone), et inversement. Certaines de ces fonctions sont analogiques, et d'autres numériques.

La fabrication de ces dispositifs de radiocommunication est un sujet de recherche important. En effet, on vise au moins trois objectifs difficiles à concilier : miniaturiser les dispositifs, augmenter les fonctionnalités et simplifier le montage. On sait notamment que l'implantation des différents composants sur le circuit imprimé est une opération relativement complexe, de nombreux composants devant être mis en place sur une surface de plus en plus restreinte, du fait des exigences de miniaturisation.

La conception de ces systèmes est donc complexe, puisqu'elle nécessite en outre d'associer des composants divers, souvent de sources multiples, qu'il faut faire fonctionner ensemble, en respectant les spécificités de chacun. Par ailleurs, après le montage de l'ensemble des composants, des phases de calibration et de tests, souvent longues et complexes, sont nécessaires pour garantir le bon fonctionnement du dispositif.

Enfin, malgré la réduction de la taille de certains composants, l'ensemble occupe une certaine surface, qu'il est difficile de réduire.

Le titulaire de la présente demande de brevet a proposé une approche palliant un certain nombre de ces inconvénients, consistant à regrouper dans un module unique, toutes ou au moins la plupart, des fonctions d'un dispositif de radiocommunication numérique.

Un tel module se présente sous la forme d'un boîtier unique et compact, préférentiellement blindé, que les fabricants de dispositifs peuvent implanter directement, sans devoir prendre en compte une multitude de composants. Dans d'autres modes de réalisation, le module peut être réparti, par exemple sur deux éléments préférentiellement interconnectés par des liaisons numériques.

Ce module (encore appelé parfois « macro-composant ») est en effet formé d'un regroupement de plusieurs composants sur un substrat, de façon à être implanté sous la forme d'un unique élément. Il comprend les composants et les logiciels essentiels nécessaires au fonctionnement d'un terminal de télécommunication utilisant des fréquences radio-électriques. Il n'y a donc plus d'étapes complexes de conception du design, et de validation de celui-ci. Il suffit de réserver la place nécessaire au module.

Un tel module permet donc d'intégrer facilement, rapidement et de façon optimisée l'ensemble des composants dans des terminaux sans-fil (téléphones portables, modems, ou tout autre application exploitant un standard sans fil).

Par ailleurs, celui-ci regroupant toutes les fonctions essentielles et ayant été conçues comme un tout, les problèmes de calibration et de tests ne se posent plus de la même manière, ou sont à tout le moins, grandement simplifiés.

Ainsi, les modules diffusés par le titulaire de la présente demande de brevet sont entièrement testés tant sur le plan matériel (« hardware ») que logiciel (« software ») sur la plupart des réseaux sur lesquels ils pourront être utilisés ensuite. En outre, le module englobe avantageusement les aspects de propriété industrielle (toutes les fonctions ayant été regroupées, c'est le fabricant du module qui gère les aspects de droits de propriété industrielle correspondants) et d'assistance technique.

### 1.5 commandes AT

Le principe de mise en oeuvre des commandes AT est déjà connu. Il est par exemple décrit dans le document de brevet FR-99 13645, et dans les diverses spécifications diffusées par le déposant, auxquels on se référera pour des plus amples informations, si nécessaire.

### 1.6 nouvelles commandes AT

Ce module 14 est capable de gérer des commandes AT simples, et en nombre réduit, permettant un dialogue simple et efficace avec une application externe associée à un terminal. Il assure la transformation au format XML et la compression des données, et gère l'émission et la réception de données 15 selon ce protocole, de façon transparente pour l'application.

L'échange de données peut ainsi se faire de façon hertzienne 16, par exemple selon le standard GPRS, ou sous la forme de messages courts (SMS). Vu du serveur 12, les informations sont au format XML. Pour les terminaux 11, il n'est pas nécessaire de connaître ce protocole, mais uniquement quelques commandes AT. Il est ainsi possible d'implémenter aisément et à faible coût une application externe dans (ou à côté) un terminal, sans qu'il soit nécessaire de prévoir un microprocesseur et des mémoires, et une application dédiée.

Comme on le verra par la suite, les commandes AT proposées peuvent être limitées au nombre de 8, tout en restant évolutives.

### 1.7 Gestion des mémoires tampon

Deux modes de transfert de données sont proposés :
- les données transitent par le module 14. Elles sont alors stockées temporairement dans des mémoires tampon (« buffers »), dont la taille est configurable en fonction des besoins ;
- les données sont transmises directement entre le terminal et le serveur, sans être stocker en mémoire dans le module 14, ce dernier gérant uniquement l'ensemble des aspects de signalisation (ouverture et fermeture de la connexion, acquittements,...).

Le premier cas pourra correspondre au cas le plus fréquent de messages de petites tailles, et le second au transfert de fichiers importants. Il est ainsi possible de tout gérer via le module, sans ajout de mémoire et d'intelligence externes, tout en permettant le transfert de données présentant un volume supérieur à la capacité de stockage du module.

Avantageusement, une commande unique permet le dimensionnement des buffers et le passage d'un mode à l'autre (le second mode correspondant à une valeur nulle).

### 1.8 Exemple d'architecture logicielle

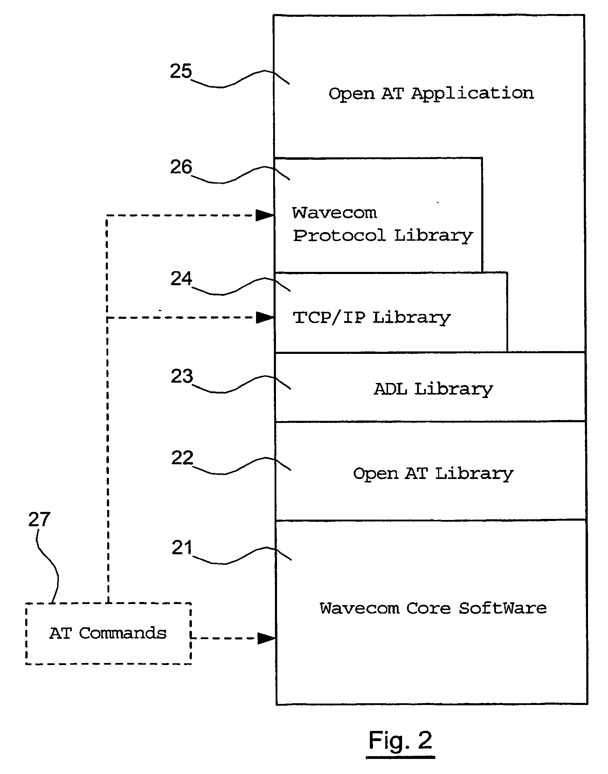

La figure 2 illustre un exemple simplifié d'architecture logicielle pouvant être mise en oeuvre dans le module 14.

Un tel module 14 comprend généralement :
- une couche logicielle de base 21 (« Wavecom Core SoftWare ») ;
- une bibliothèque Open AT 22 (« Open AT Library ») ;
- une bibliothèque ADL 23 (« ADL Library ») ;
- une bibliothèque TCP/IP 24 (« TCP/IP Library ») ;
- une couche applicative 25 (« Open AT Application »).

Selon l'invention, on prévoit donc en outre une bibliothèque 26 de commandes spécifiques pour communiquer selon le protocole prédéterminé, qui se place au dessus de la bibliothèque TCP/IP 24.

Les commandes AT 27 s'adressent, selon les cas, à la couche de base 21, à la bibliothèque TCP/IP 24 ou à la bibliothèque spécifique 26.

L'interface par commandes AT proposée comprend dans cette bibliothèque 26 comprend seulement 8 commandes, permettant d'exploiter entièrement le protocole, et notamment de :
- Configurer le modem (bearer, tables WBXML...) ;
- Externaliser la gestion des pages XML de grande taille ;
- Se connecter à la gateway M2M ;
- Gérer des paramètres de configuration ;
- Envoyer et recevoir des pages XML par commande générique ;
- Mode automatique pour collecté les pages sur la gateway et envoyer une page sauvé dans le module.
- Manipuler facilement les pages XML échangées avec une passerelle « gateway » M2M (créer et modifier une page XML, « parser » (compresser) une page reçue, rechercher une balise (« tag ») particulière).

### 2. description détaillée d'un mode de réalisation de commandes

On décrit ci-après les commandes AT pouvant être utilisées pour piloter le protocole prédéterminé 26.

### 2.1 Documents connexes

En cas de besoin, on pourra se référer notamment aux documents suivants :
[1] spécification « Orange M2M Protocol Definition », et notamment
   - Définition de protocole 120-Orange M2M GPRS v8
   - Définition de protocole 120-Orange M2M SMS v4.0
   - Définition de protocole 120-Orange M2M SOAP v4.0
   - Méthode de codage 120-Orange M2M WBXML v3.0
[2] Guide de l'interface des commandes AT Wavecom référence : WM_ASW_OAT_UGD_010 révision 3 ou suivante. Ce document décrit les commandes AT prises en charge par les produits Wavecom permettant de gérer des événements et des services.

### 2.2 Abréviations et définitions

On utilise par la suite les abréviations suivantes :
- APN: Nom de point d'accès
- DNS: Système de noms de domaine
- GGSN: Noeud de service GPRS de transit- Utilisé par des périphériques pour établir des connexions réseau et par le système proposé pour consulter l'adresse IP de blocs MSISDN que les SMSC connaissent tous pour acheminer les messages dans les deux sens.
- GPRS: Système général de radiocommunication par paquets.
- GSM: Système mondial de communications mobiles.
- ISP: Fournisseur de services Internet
- M2M: Machine vers machine
- ME: Equipement mobile
- MS: Station mobile
- MSISDN: Numéro RNIS de station mobile - Synonyme du numéro de téléphone mobile.
- NMTS: « No more to send » (Plus rien à envoyer)
- SI: Logiciel intégré « Smart Integrator ».
- SMPP: Protocole de transfert de courrier simple. Utilisé pour la communication avec les SMSC. Ne s'applique pas au GPRS.
- SMSC: Centre serveur de messages courts.
- WAP: Protocole d'application sans fil
- WBXML: Langage de balisage extensible binaire WAP. Représentation binaire pour des documents WAP. Dans le contexte du transit, le WAP ne sera pas utilisé, mais la spécification WBXML s'appliquera néanmoins aux documents XML standard.
- XML: Langage de balisage extensible

Les termes MS ou ME sont utilisés pour les terminaux mobiles prenant en charge des services GSM.

Le mot « produit » désigne tout produit (module notamment) Wavecom prenant en charge l'interface des commandes AT.
- <CR>: Caractère de retour chariot
- <LF>: Caractère de changement de ligne
- [...]: Paramètre facultatif d'une commande AT
- <....>: Nom de paramètre mis entre chevrons. Les chevrons n'apparaissent pas dans la ligne de commande.

### 2.3 syntaxe des commandes AT

On décrit ci-après le format des commandes AT, ainsi que les mécanismes de valeur par défaut pour leurs paramètres.

### 2.3.1 Ligne de commande

Les commandes commencent toujours par le préfixe standard « AT+M2M » et se terminent par le caractère <CR>.

Les paramètres facultatifs sont mis entre crochets [ ].

### Exemple : AT+M2MCmd=<Param1>[,<Param2>]

Ici, <Param2> est facultatif. Lorsque la commande *AT*+*M2MCmd* est exécutée sans <param2>, la valeur par défaut de <param2> est utilisée.

### 2.3.2 Réponses d'information et codes de résultat

Les réponses commencent et finissent par <CR><LF> (sauf pour le format de réponse ATVO DCE) et les commandes ATQ1 (suppression de code de résultat). *(voir le document [2]).*
- Si la syntaxe de la commande est incorrecte, la commande est transmise au logiciel de base Wavecom pour y être traitée. Dans ce cas, le message « ERROR » est piloté par le logiciel de base (« core software ») WAVECOM.
- Si la syntaxe de la commande est correcte, mais transmise avec des paramètres incorrects, la chaîne <CR><LF>+M2M ERROR: <Err><CR><LF> est renvoyée avec des codes d'erreur adaptés.
- Si la ligne de commande a été exécutée avec succès, une chaîne <CR><LF>"OK"<CR><LF> est renvoyée.

### 2.4 commandes, indications et codes d'erreur

On se référera à l'annexe jointe, décrivant en détail les commandes mises en oeuvre selon le présent mode de réalisation. Cette annexe présente les éléments suivants :
- Commandes de configuration :
   - Paramètres généraux +M2MGSET
   - Paramètres de connexion +M2MCSET
   - Paramètres de table de symboles WBXML +M2MWBXML
- Commandes générales :
   - Gestion de connexion +M2MCONM
   - Envoyer message +M2MSM
   - Créer ou modifier un message XML +M2MCM
   - Recevoir message +M2MRM
   - Administration de protocole +M2MPA
- Indications M2M :
   - Indications de connexion +M2MCONI
   - Indications d'envoi de message +M2MSMI
   - Indications de réception de message +M2MRMI
   - Indication d'analyse du message +M2MPMI
- Codes d'erreur.

### 2.5 exemple

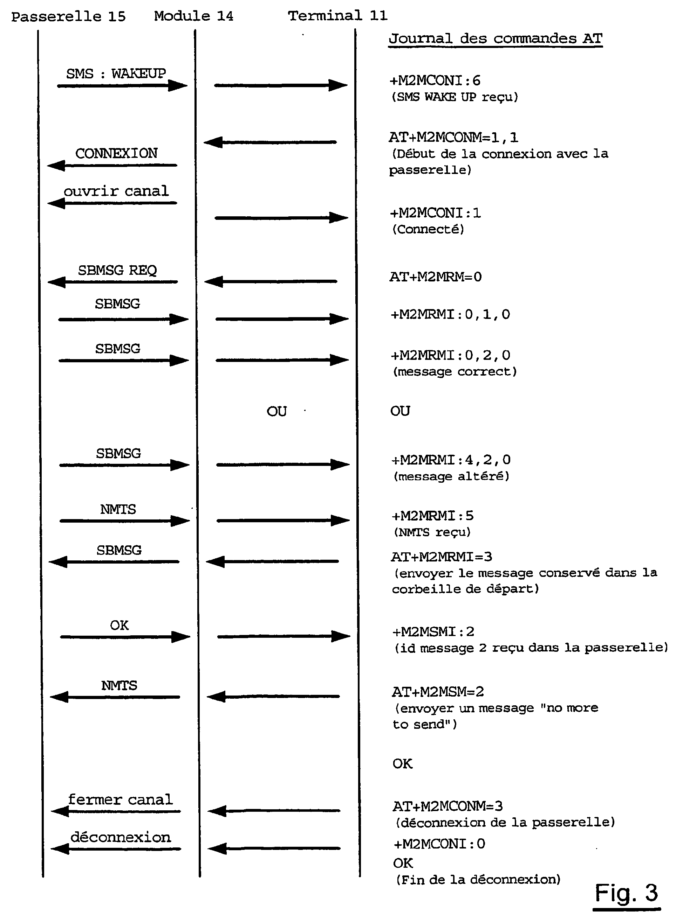

La figure 3 illustre, sous la forme d'un diagramme séquentiel la mise en oeuvre de commandes AT du protocole décrit ci-dessus, dans le cas d'une corbeille d'arrivée en mode manuel.

Sur cette figure, les informations sont présentées selon un formalisme habituel pour l'homme du métier, faisant apparaître précisément les échanges de données entre les différentes entités (serveur, ou courtier, module et application externe). La quatrième colonne indique les commandes utilisées, et le cas échéant leur signification.

Il n'apparaît pas nécessaire de commenter de façon supplémentaire ces figures, dont l'interprétation est directe pour l'homme du métier.

### ANNEXE

### 1. Commandes de configuration

Divers paramètres sont requis pour donner au produit Wavecom toutes les informations sur la connexion initiale :
- Le support utilisé : SMS ou GPRS
- Le mode fonctionnel de la pile de protocole Wavecom Orange M2M.
- Toutes les données relatives au support pour donner accès à une infrastructure TCP/IP

### 1.1 Paramètres généraux +M2MGSET

### 1.1.1 Description

Cette commande permet de configurer tous les paramètres utilisés pour sélectionner le support et le mode fonctionnel du protocole Wavecom Orange M2M.

### 1.1.2 Syntaxe

| **Commandes** | **Réponses possibles** |
|---|---|
| AT+M2MGSET=<BearerSel>[,<NotifyLevel>[,<OutB | OK |
| oxSize>[,<InBoxSize>[,<RetainOutMessage>[,<Auto | Ou |
| maticMode>[,<FetchMsgDelay>[,<RetryMsgCount>[, | |
| <M2Mwakeup>]]]]]]]] | Codes d'erreur: Codes d'erreur: |
| | +M2M ERROR: 4000 |
| | +M2M ERROR: 4001 |
| *Remarque: configurer ou répertorier tous les paramètres généraux* | +M2M ERROR: 4002 |
| AT+M2MGSET? | +M2MGSET: |
| | <BearerSel>[,<NotifyLevel>[,<OutBoxSize>[,<InBoxSiz |
| *Remarque: paramètres actuels.* | e>[,<RetainOutMessage>[,<AutomaticMode>[,<FetChM |
| | sgDelay>[,<RetryMsgCount>[,<M2Mwakeup>]]]]]]]] |
| | OK |
| AT+M2MGSET=? | +M2MGSET: (0-1), (0-3), (0-32767), (0-32767), (0-1). |
| | (0-3), (1-32767). (0-10), (0-1) |
| *Remarque: valeurs possibles* | OK |
| **AT+M2MGSET**=0 | OK |
| | *Remarque : GPRS sélectionné* |
| *Remarque: configurer le support* | |
| **AT+M2MGSET**=.2 | OK |
| | *Remarque: seuls les événements de message sont notifiés*. |
| *Remarque : configurer le paramètre <NotifyLevel>* | |
| **AT+M2MGSET=**....2 | +M2M ERROR: 4001 |
| | *Remarque : opération non autorisée* |
| *Remarque: configurer le paramètre* | |
| *<RetainOutMessage> avec une valeur erronée* | |
| | **+M2MGSET:** 0,3,512,32767,0,0,600,0,1 |
| **AT+M2MGSET?** | |
| *Remarque: lire toutes les valeurs actuelles* | OK |
| **AT+M2MGSET=?** | **+M2MGSET:** (0-1), (0-3), (0-32767), (0-32767), (0-1), |
| | (0-3), (1-32767), (0-10), (0-1) |
| *Remarque: valeurs possibles* | |
| | OK |

### 1.1.3 Valeurs définies

| **Nom de paramètre** | **Description** | **Spécifications** | **Valeur par défaut** |
|---|---|---|---|
| | | **(0-1)** | |
| | | • **1** : SMS (les paramètres MSISDN | |
| <BcarerSel> | Sélection SMS/GPRS | sont utilisés pour une connexion) | 0 |
| | | • **0** GPRS (les paramètres de port APN | |
| | | et TCP sont utilisés pour une connexion) | |
| | | **(0-3)** | |
| | Niveau d'indication concernant tous les événements relatifs aux connexions et/ou messages comme réponses non sollicitées (voir le chapitre sur les indications M2M). | • 0 Pas de notification | |
| | | • **1** Notifier sur les événements de | |
| <NotifyLevel> | | connexion. | 3 |
| | | • 2 Notifier sur les événements de | |
| | | message | |
| | | • **3** Notifier tous les événements. | |
| | Taille en octet du tampon de la | | |
| | corbeille de départ | | |
| | Il ne peut y avoir qu'un message à | **(0-32767)** | |
| | la fois dans le tampon de la | • **0** : le message ne peut pas être | |
| | corbeille de départ. | conservé et est directement traité: la | |
| <OutBoxSize> | Si la corbeille de départ contient un message alors que le paramètre OutBoxSize est modifié, ce message est perdu. | commande AT est libre après l'envoi du message. | 32767 |
| | | • **1-32767 :** la commande AT est | |
| | | directement fibre et le message à | |
| | | envoyer est stocké, en attente de la | |
| | La corbeille de départ est | séquence d'envoi. | |
| | enregistrée dans la mémoire flash. | | |
| | Taille en octet de la file | | |
| | d'attente de la corbeille | | |
| | d'arrivée | **(0-32767)** | |
| | Le nombre de messages | • **0** : tous les messages reçus sont | |
| | stockés dans le tampon dépend | automatiquement envoyés à | |
| | de la taille de chaque message. | l'application externe. | |
| | | *Sortie terminée par <Ctrl-P><Ctrl-C*>, | |
| <InBoxSize> | Si la boîte de sortie contient des messages alors que le paramètre OutBoxSize est modifié, ces messages sont perdus. | *en texte XML en clair (si la source est* | 32767 |
| | | *en WBXML, le décodage est* | |
| | | *automatiquement effectué).* | |
| | | • **1-32767** : les messages reçus | |
| | | sont stockés. L'application externe doit | |
| | | les récupérer manuellement. | |
| | La corbeille d'arrivée est | | |
| | enregistrée dans la mémoire | | |
| | flash. | | |
| | | **(0-1)** | |
| <RetainOutMes | Le message dans le tampon de sortie est conservé après avoir | • 0: le tampon est libéré après | 0 |
| sage> | | l'envoi du message à la passerelle | |
| sage> | été envoyé à la passerelle. | • **1** : le message est conservé après son | |
| | | envoi. | |
| | | • **0** Manual mode | |
| | | • **1** : Automatic mode | |
| <AutomaticMod e> | | • **2** Input Automatic/0utput Manual | 0 |
| | Mode de fonctionnement | | |
| | | * **3** : Input Manual / Output | |
| | | Automatic | |
| | | (voir détails ci-après) | |
| | Nombre minimum de secondes | | |
| <FetchMsgDela y> | entre la prise en charge | | |
| | automatique des messages sur | **(1-32767)** | 600 |
| | la passerelle: pour | | |
| | <AutomaticMode> 1 et 2 | | |
| | Nombre d'échecs de tentative | | |
| <RetryMsgCoun | d'envoi de message avant | | |
| ▷ | d'annuler l'activité de tentative | **(0-10)** | 0 |
| | d'envoi. Seulement si le | | |
| | support GPRS est utilisé. | | |
| | Configure le service de réveil SMS | **(0-1)** | |
| <M2Mwakeup> | | • **0**: désactivé | 1 |
| | | • **1** : activé | |

### 1.1.4 Détails sur le paramètre <Automatic mode>:

- **Manual mode :** le service est piloté par la liaison série au moyen de commandes d'intervention. A réception d'un appel de réveil SMS, un message +M2MCONNI est envoyé à la liaison série pour informer l'application distante que l'événement a eu lieu. Le pilote doit initier une transaction d'échange en utilisant des commandes d'intervention pour envoyer et recevoir des messages.
- **Automatic mode :** le service gère de façon autonome la transaction d'échange avec la passerelle M2M en utilisant le paramètre **<Fetch Message Delay>.** A la réception d'un SMS de réveil, un échange démarre immédiatement.
- **Input automatic / Output manual mode :** les messages entrants sont traités automatiquement en utilisant le paramètre **<Fetch Message Delay**>. Aucune création automatique de message XML sortant n'a lieu.
- **Input manual / Output automatic mode** : le message sortant est automatiquement généré (si le tampon de sortie contient un message conservé qui a été modifié depuis le dernier envoi) et envoyé à la passerelle en utilisant le paramètre **<Fetch Message Delay>.** Pas de prise en charge automatique des messages entrants.

### 1.1.5 Codes d'erreur possibles

| | |
|---|---|
| +M2M ERROR: 4000 | La fonction de protocole Wavecom Orange M2M n'est pas activée. Cette erreur est renvoyée lorsque la fonction du protocole Wavecom Orange M2M n'a pas été activée dans le module WISMO. |
| | |
| +M2M ERROR 4001 | Opération interdite. Cette erreur est renvoyée lorsqu'un paramètre erroné est détecté. |
| | |
| +M2M ERROR 4002 | Opération non prise en charge par la configuration actuelle (dans la connexion). |

### 1.2 Paramètres de connexion +M2MCSET

### 1.2.1 Description

Cette commande est utilisée pour configurer tous les paramètres associés à la connexion au protocole Wavecom Orange M2M.

### 1.2.2 Syntaxe

| **Commandes** | **Réponses possibles** |
|---|---|
| AT+M2MCSET=<OMSISDN>[,<DMSISDN>[,<APN>[, | OK |
| <UserName>,[<Password>[,<IpAddress>[,<SocketPort | +M2M ERROR: 4000 |
| >]]]]]] | +M2M ERROR: 4001 |
| *Remarque: configurer tous les paramètres de connexion* | |
| AT+M2MCSET? | +M2MCSET: <OMSISDN>, <DMSISDN>, <APN>, |
| | <UserName>. <Password>, <IpAddress>, |
| *Remarque: valeurs actuelles des paramètres* | <SocketPort> |
| | OK |
| AT+M2MCSET=? | OK |
| *Remarque: valeurs possibles* | |
| **AT+M2MCSET**="+33612214629", | OK |
| "+33612214610","m2m.orange","myusemame" "mypasswo | |
| rd"," 1.2.3,4","1024" | *Remarque: nouveaux paramètres stockés* |
| *Remarque: configurer tous les paramètres* | |
| **AT+M2MCSET**=....."1.2.3.4"," 1024" | OK |
| | |
| *Remarque: configurer uniquement l'adresse IP et les* | *Remarque: nouveaux paramètres stockés* |
| *paramètres de port* | |
| **AT+M2MCSET**="+33612214629", | +M2M ERROR: 4001 |
| "+33612214610","m2m.orangé","myusemame";"mypasswo | |
| rd","0,0,0,0","1 024" | |
| | *Remarque: opération non autorisée* |
| *Remarque: configurer tous les paramètres ISP avec un* | |
| *paramètre erroné (adresse IP)* | |
| **AT+M2MCSET?** | +M2MCSET: "+33612214629" |
| | ,"+33612214610","m2m.orange","myusername", |
| *Remarque: valeurs actuelles* | "mypassword", "1.2.3.4","1024" |
| | OK |
| | *Remarque : plage des valeurs stockées* |
| AT+M2MCSET=? | OK |
| *Remarque : valeurs possibles* | *Remarque: valeurs prises en* c*harge* |

### 1.2.3 Valeurs définies

Les paramètres suivants sont utilisés pour les deux supports SMS et GPRS.

| **Paramètre de contexte** | **Description** | **Format** | **Spécifications** | **Valeur par défaut** |
|---|---|---|---|---|
| <OMSISDN> | RNIS de la station mobile (à l'origine du numéro de téléphone). | Chaîne alphanumérique | Longueur max.=32 | .... |
| <DMSISDN> | RNIS cible de la passerelle M2M | Chaîne alphanumérique | Longueur max.=32 | .... |

Les paramètres suivants sont utilisés lorsque le support GPRS est sélectionné. Voir également la section « autres paramètres ».

| **Paramètre de contexte** | **Description** | **Format** | **Spécifications** | **Valeur par défaut** |
|---|---|---|---|---|
| <APN> | APN provenant de l'ISP pour fournir l'accès GPRS | Chaîne alphanumérique | Longueur max.=64 | .... |
| <UserName> | Nom d'utilisateur APN provenant de l'ISP pour fournir l'accès GPRS. | Chaîne alphanumérique | Longueur max.=32 | .... |
| <Password> | Mot de passe APN provenant de l'ISP pour fournir l'accès GPRS. | Chaîne alphanumérique | Longueur max.=32 | .... |
| <IpAddress> | Adresse IP de la passerelle | Chaîne alphanumérique | Longueur max. = 120 | .... |
| | | | Longueur max.= 5 | |
| <SocketPort> | Port de passerelle utilisé avec la connexion | Chaîne alphanumérique | Les nombres supérieurs à 65 535 sont interdits, | .... |

### 1.2.4 Codes d'erreur possibles

| | |
|---|---|
| +M2M ERROR: 4000 | La fonction de protocole Wavecom Orange M2M n'est pas activée. Cette erreur est renvoyée lorsque la fonction du protocole Wavecom Orange M2M n'a pas été activée dans le module WISMO. |
| | |
| +M2M ERROR 4001 | Opération interdite. Cette erreur est renvoyée lorsqu'un paramètre erroné est détecté. |
| | |
| +M2M ERROR 4002 | Opération non prise en charge par la configuration actuelle (dans la connexion). |

### 1.3 Paramètres de table de symboles WBXML +M2MWBXML

### 1.3.1 Description

Cette commande permet de configurer la table de symboles connue pour l'analyseur syntaxique WBXML. Cette opération ne peut être effectuée que si le service n'est pas connecté.

### 1.3.2 Syntaxe

| **Commande** | **Réponses possibles** |
|---|---|
| **AT+M2MWBXML**=<Type>,<Param1>[,<Param2>[,<Ppar | OK |
| ama3>,[...]]]]<CR> | |
| | ou |
| *Remarque : configurer une partie de la table de symboles connue.* | Codes d'erreur: |
| | +M2M ERROR: 4000 |
| | +M2M ERROR: 4001 |
| | +M2M ERROR: 4002 |
| | +M2M ERROR: 4003 |
| **AT+M2MWBXML?** | **+M2MWBXML:** 0,<Param1>,<Param2>,.... |
| | **+M2MWBXML:** 1,<Param1>,<Param2>, ... |
| *Remarque: renvoyer la table de symboles configurée* | +M2MWBXML: 2,<Param1>,<Param2>,... |
| | OK |
| **AT+M2MWBXML=?** | **+M2MWBXML:** (0-2) |
| *Remarque: valeurs possibles* | OK |
| **AT+M2MWBXML**=1,"id","name" | OK |
| *Remarque : entrer les données de nom d'attribut* | |
| **AT+M2MWBXML**= 2,0. 1,Thing | **+M2M ERROR:** 4001 |
| | *Remarque : opération non autorisée* |
| *Remarque: entrer les informations de valeur d'attribut avec des paramètres erronés* | |
| | |
| **AT+M2MWBXML?** | **+M2MWBXML**: 0,"servlet-name","servlet","servlet-class" |
| *Remarque: lire toutes les valeurs configurées* | **+M2MWBXML:** 1,"id","name" |
| | **+M2MWBXML:**2,"0.1","Thing" |
| | OK |
| **AT+M2MWBXML=?** | **+M2MWBXML**: (0-2) |
| *Remarque: valeurs possibles* | OK |

### 1.3.3 Valeurs définies

| | |
|---|---|
| **<Type>** | **(0-2)** Type des valeurs définies |
| **0** | Définit la liste des indicateurs utilisés par WBXML pour le |
| | codage/décodage des messages XML |
| **1** | Définit la liste des noms d'attribut utilisés par WBXML pour le |
| | codage/décodage des messages XML |
| **2** | Définit la liste des valeurs d'attribut utilisées par WBXML pour |
| | le codage/décodage des messages XML. Une correspondance |
| | bi-univoque doit être établie entre les valeurs et les paramètres |
| | de noms d'attribut. |
| **<Param n>** | Indicateurs, nom d'attribut ou valeur d'attribut. |

### 1.3.4 remarque

Pour réinitialiser chaque liste, entrez simplement le type sans aucune liste. Ainsi, pour réinitialiser la table de symboles, on entre simplement les commandes :
- AT+M2MWBXML=0 (réinitialise la liste des indicateurs de la table de symboles)
- AT+M2MWBXML=1 (réinitialise la liste des attributs de la table de symboles)
- AT+M2MWBXML=2 (réinitialise la liste des valeurs de la table de symboles)

### 1.3.5 Codes d'erreur possibles

| | |
|---|---|
| +M2M ERROR: 4000 | La fonction de protocole Wavecom Orange M2M n'est pas activée. Cette erreur est renvoyée lorsque la fonction du protocole Wavecom Orange M2M n'a pas été activée dans le module WISMO. |
| | |
| +M2M ERROR 4001 | Opération interdite. Cette erreur est renvoyée lorsqu'un paramètre erroné est détecté. |
| | |
| +M2M ERROR 4002 | Opération non prise en charge par la configuration actuelle. |
| | |
| +M2M ERROR: 4003 | Service déjà connecté. |

### 2. Commandes générales

### 2.1 Gestion de connexion +M2MCONM

### 2.1.1 Description

Cette commande permet de gérer la connexion à une passerelle M2M.

### 2.1.2 Syntaxe

| **Commande** | **Réponses possibles** |
|---|---|
| **AT+M2MCONM**=<Mode>[,< | OK |
| CleanDisconnect>,[<ForcedAcknowledge>]] | Or |
| | Codes d' erreur: |
| | +M2M ERROR: 4000 |
| | +M2M ERROR: 4001 |
| *Remarque: opérations de connexion*/*déconnexion* | +M2M ERROR: 4002 |
| | +M2M ERROR: 4009 |
| **AT+M2MCONM?** | **+M2MCONM:** <Status> |
| *Remarque: renvoyer l'état de la connexion* | OK |
| **AT+M2MCONM=?** | **+M2MCONM:** (liste des <Mode> pris en charge), (liste des |
| | <CleanDisconnect> pris en charge), (liste des |
| *Remarque: valeurs possibles* | <ForcedAcknowledge> pris en charge) |
| | OK |
| **AT+M2MCONM?** | **+M2MCONM:** 0 |
| | OK |
| *Remarque: obtenir l'état actuel de la connexion* | *Remarque: le module n'est pas connecté à la passerelle* |
| **AT+M2MCONM=1**..**1** | OK |
| | **+*****M2MCON1:** 1* |
| | *Remarque: opération de connexion lancée avec le paramètre* |
| | *ForcedAcknowledge mode activé* |
| **AT+M2MCONM?** | **+M2MCONM:** 2 |
| | OK |
| | *Remarque: opération de connexion en suspens* |
| *Remarque: obtenir l'état actuel de la connexion* | |
| **AT+M2MCONM=1** | +M2M ERROR: 4003 |
| | *Remarque: opération non prise en charge* |
| *Remarque: une autre connexion est demandée* | |
| **AT+M2MCONM?** | **+M2MCONM: 1** |
| *Remarque : obtenir l'état actuel de la connexion* | OK |
| | *Remarque: la connexion est établie avec la passerelle* |
| **AT+M2MCONM=2, 0** | OK |
| *Remarque: déconnexion avec une réinitialisation des files* | **+M2MCONI:** 0 |
| *d'attente* | |
| **AT+M2MCONM=?** | **+M2MCONM:** (0-1),(0-1),(0-1) |
| *Remarque: valeurs possibles* | OK |

### 2.1.3 Valeurs définies

| **<Mode>** | **(0-2)** |
|---|---|
| | **0** : déconnexion d'une session active de protocole |
| | Wavecom Orange M2M |
| | **1** : connexion à la passerelle M2M distante (activation |
| | du support, mais le démarrage de la transaction dépend |
| | du paramètre de mode automatique ; voir 3. 1). |
| | **2** : annulation de la connexion, seulement si la |
| | connexion est en suspens. |
| **<CleanDisconnect>** | **(0-1)** Mode de déconnexion. (valeur par défaut = 1) |
| | **0 :** la déconnexion commence immédiatement, la file |
| | d'attente est vidée et toutes les transactions sortantes |
| | sont supprimées. |
| | |
| | **1** : tous les messages en file d'attente (en attente ou en |
| | suspens) sont traités avant la déconnexion. |
| **<ForcedAcknowledge>** | Si la taille d'un message entrant dépasse la taille |
| | maximale de la file d'attente, ce paramètre force la |
| | bibliothèque à envoyer des accusés de réception pour |
| | de tels messages à la passerelle de message, même s'ils |
| | n'ont pas été réellement reçus. |
| | |
| | **0** : le mode est désactivé |
| | **1** : le mode est activé (valeur par défaut) |
| | |
| **<Status>** | |
| | **(0-3)** Statut de la connexion avec la passerelle |
| | **0** : non connecté |
| | **1** : connecté |
| | **2** : connexion en suspens |
| | **3** : déconnexion |

### 2.1.4 Codes d'erreur possibles

| | |
|---|---|
| +M2M ERROR: 4000 | La fonction de protocole Wavecom Orange M2M n'est pas activée. ,Cette erreur est renvoyée lorsque la fonction du protocole Wavecom Orange M2M n'a pas été activée dans le module WISMO. |
| | |
| +M2M ERROR 4001 | Opération interdite. Cette erreur est renvoyée lorsqu'un paramètre erroné est détecté. |
| | |
| +M2M ERROR: 4003 | Client déjà connecté |
| | |
| +M2M ERROR: 4004 | Opération de connexion en suspens |
| | |
| +M2M ERROR: 4005 | Opération de déconnexion en suspens |
| | |
| +M2M ERROR: 4006 | Client non connecté. Cette erreur est renvoyée lorsqu'une déconnexion est demandée lorsque le ME n'est pas connecté. |
| | |
| +M2M ERROR: 4007 | Pas de réseau |
| | |
| +M2M ERROR: 4008 | Pas de GPRS |
| | |
| +M2M ERROR: 4009 | Pas de TCP/IP |

### 2.2 Envoyer message +M2MSM

### 2.2.1 Description

Cette commande permet d'envoyer des messages XML ou un message No More To Send (plus rien à envoyer) ou d'obtenir le statut de ces messages.
Cette commande est utilisée en cas de « mode manuel » ou en « mode automatique » si aucune « page stockée » n'est définie (voir 3.1) et après une connexion M2M.

### 2.2.2 Syntaxe

| **Commande** | | | | **Réponses possibles** |
|---|---|---|---|---|
| **AT+M2MSM**=<ActionType>>[,<ReplyID>[,<WBXML mode>]] | | | | Lorsqu'un message est envoyé |
| | | | | +M2MSM: <Msgld> |
| | | | | OK |
| *Remarque: configurer le paramètre de tous les messages* | | | | ou |
| | | | | lorsque le statut d'un message est demandé |
| | | | | +M2MSM: <Status> |
| | | | | OK |
| | | | | ou |
| | | | | Codes d'erreur : |
| | | | | +M2M ERROR: 4000 |
| | | | | +M2M ERROR: 4001 |
| | | | | +M2M ERROR: 4006 |
| | | | | +M2M ERROR: 4010 |
| | | | | +M2M ERROR: 4012 |
| | | | | +M2M ERROR: 4013 |
| | | | | +M2M ERROR: 4014 |
| | | | | +M2M ERROR: 4015 |
| **AT+M2MSM?** | | | | OK |
| *Remarque* : *aucun effet* | | | | |
| **AT+M2MSM=?** | | | | **+M2MSM:** (liste des <ActionType> pris en charge) |
| *Remarque* : *valeurs possibles* | | | | OK |
| **AT+M2MSM**=0 | | | | > |
| | | | | *Remarque : attend la fin de la page XML en texte en clair par* |
| *Remarque* : *envoyer un message XML en texte en clair* | | | | *<ctrl>P<ctrl>C* |
| <m2m> | | | | |
| | <servlet> | | | **+M2MSM:** 1 |
| | | <servlet-name>test 1</servlet-name> | | OK |
| | | | | |
| | | <servlet-class>test 2</servlet-class> | | *Remarque : le message est dans le tampon de sortie ou est* |
| | | | | *envoyé.* |
| | | <init-param> | | *Lorsque le paramètre de page stockée (voir 3.1) est défini, la* |
| | | | <param-name id="0.1">test | *page est conservée.* |
| 3</param-name> | | | | |
| | | | <param-value>test 4</param-value> | *En mode automatique, la page n'est renvoyé que si elle a été modifiée.* |
| | | | <description name="Thing">test | |
| 5</description> | | | | |
| | | </init-param> | | |
| | | <load-on-startup>1</load-on-startup> | | |
| | | | | |
| | </servlet> | | | |
| | <foo> | | | |
| | | <bar>test 6</bar> | | |
| | | <gservlet-class>test 7</gservlet-class> | | |
| | | | | |
| | </foo> | | | |
| </m2m> | | | | |
| <ctr1>P<ctrl>C | | | | |
| *Remarque : données utiles* | | | | |
| **AT+M2MSM=**2 | | | | **+M2MSM:** W |
| *Remarque : obtenir le statut du dernier message* | | | | OK |
| *entré* | | | | *Remarque: message dans la file d'attente* |
| **AT+M2MSM**=3 | | | | OK |
| *Remarque: envoyer un message No More To Send (plus* | | | | |
| *rien à envoyer)* | | | | |
| **AT+M2MSM=4** | | | | OK |
| *Remarque : renvoyer le message conservé* | | | | |
| | | | | **+M2MSMI:** 2 |
| | | | | *Remarque: id message 2 reçu* |
| **AT+M2MSM?** | | | | OK |
| **AT+M2MSM=?** | | | | **+M2MSM:** (0-2) |
| *Remarque : valeurs possibles* | | | | OK |

**Remarque** : On peut sortir d'une commande <ctrl-P> dans le texte par <ctrl-P><ctrl-P>.

### 2.2.3 Valeurs définies

| | |
|---|---|
| **<ActionType>** | Type d'opération |
| | **0** : entrer et envoyer un message |
| | **1** : entrer et envoyer un message sollicité (SMS uniquement) |
| | **2** : obtenir le statut du dernier message entré |
| | **3** : envoyer un message "No More To Send" à la passerelle |
| | **4** : renvoyer le message XML stocké |
| | **5** : effacer la page XML stockée |
| **<ReplyID>** | Pour un message sollicité uniquement (c'est-à-dire, |
| | ActionType==1), référence du message de la passerelle M2M |
| | d'origine au périphérique. Uniquement pour le message |
| | compressé WBXML à envoyer sur le support SMS |
| **<WBXML** | **0** : l'analyseur syntaxique WBXML n'est pas utilisé (le |
| **Mode>** | message est envoyé en texte en clair) |
| | **1** : l'analyseur syntaxique WBXML est utilisé avec la table de |
| | symboles connue, si elle est définie (valeur par défaut) |
| | **2** : l'analyseur syntaxique WBXML est utilisé et l'analyseur |
| | syntaxique WBXML va générer la table de compression et |
| | l'insérer dans le message. |
| **<Status>** | Statut d'un message |
| | **W** : EN ATTENTE. Le message est dans la file d'attente, la |
| | transaction n'a pas démarré ou le message est conservé. |
| | **P** : EN SUSPENS. Le message est dans la file d'attente. La |
| | transaction est en cours. |
| | **N** : message non trouvé. Le message n'est pas dans la file |
| | d'attente. Soit la transaction est terminée, soit le message n'a |
| | jamais été mis en file d'attente. |

### 2.2.4 Codes d'erreur possibles

| | |
|---|---|
| +M2M ERROR: 4000 | La fonction de protocole Wavecom Orange M2M n'est pas activée. Cette erreur est renvoyée lorsque la fonction du protocole Wavecom Orange M2M n'a pas été activée dans le module WISMO. |
| | |
| +M2M ERROR 4001 | Opération interdite. Cette erreur est renvoyée lorsqu'un paramètre erroné est détecté. |
| | |
| +M2M ERROR 4002 | Opération non prise en charge par la configuration actuelle. |
| | |
| +M2M ERROR: 4006 | Client non connecté |
| | |
| +M2M ERROR: 4010 | Tampon SATURE : une page est stockée dans le tampon de sortie ou la création d'une page XML (voir 4.3) est en cours. |
| | |
| +M2M ERROR: 4012 | Le message XML en texte en clair est trop long sur SMS |
| | |
| +M2M ERROR: 4013 | Pas de message sollicité sur GPRS. |
| | |
| +M2M ERROR: 4014 | Le message sollicité n'est pas compressé par WBXML. |
| | |
| +M2M ERROR: 4015 | Pas de message dans la file d'attente. |

### 2.3 Créer ou modifier un message XML +M2MCM

### 2.3.1 Description

Cette commande permet de créer ou de modifier facilement (si le paramètre de conservation est défini ; voir 3.1) un message XML en texte en clair dans le tampon de sortie.

A la fin de la création, le message est automatiquement envoyé.

Cette commande est utilisée en cas de « mode manuel » ou en « mode automatique » si aucune « page stockée » n'est définie (voir 3.1) et après une connexion M2M.

### 2.3.2 Syntaxe

| **Commande** | | | | **Réponses possibles** |
|---|---|---|---|---|
| **AT+M2MCM**=<ActionType>,[<param1>,[<param2>,[<param3>]]] | | | | A la fin de la création, lorsque le message est envoyé |
| | | | | +M2MCM: <Msgld> |
| | | | | OK |
| | | | | ou |
| | | | | Codes d'erreur: |
| | | | | +M2M ERROR: 4000 |
| | | | | +M2M ERROR: 4001 |
| | | | | +M2M ERROR: 4006 |
| | | | | +M2M ERROR: 4010 |
| *Remarque: créer un message XML* | | | | +M2M ERROR: 4012 |
| | | | | +M2M ERROR: 4013 |
| | | | | +M2M ERROR: 4014 |
| | | | | +M2M ERROR: 4016 |
| | | | | +M2M ERROR: 4017 |
| | | | | +M2M ERROR: 4019 |
| | | | | +M2M ERROR: 4020 |
| **AT+M2MCM?** | | | | OK |
| *Remarque: aucun effet* | | | | |
| **AT+M2MCM=?** | | | | **+M2MCM:** (liste des <ActionType> pris en charge) |
| *Note: Possible values* | | | | OK |
| | | | | OK |
| **AT+M2MCM=1,1** | | | | |
| *Remarque: démarrer la création d'un message XML dans* | | | | |
| *le tampon de sortie en utilisant l'analyseur syntaxique* | | | | |
| *WBXML avec la table de symboles connue.* | | | | |
| **AT+M2MCM=**2,"m2m" | | | | OK |
| *Remarque : écrire un indicateur de début* | | | | |
| **AT+M2MCM=**2," servlet" | | | | OK |
| **AT+M2MCM=**2,"servlet-name" | | | | OK |
| **AT+M2MCM=**4**, "**test 1 " | | | | OK |
| | | *Remarque : écrire une donnée* | | OK |
| **AT+M2MCM=**5**;** "servlet-name" | | | | |
| | | *Remarque : écrire un indicateur de fin* | | OK |
| **AT+M2MCM=**2**,**"servlet**-**class" | | | | OK |
| **AT+M2MCM=**4**,**"test 2" | | | | OK |
| **AT+M2MCM**=5,"servlet-class" | | | | OK |
| **AT+M3MCM=**2,"init-param" | | | | OK |
| **AT+M2MCM=**2;"param**-**name**"** | | | | OK |
| **AT+M2MCM=**3 **,**"id", "0.1" | | | | OK |
| **AT+M2MCM=**4**,**"test 3" | | | | OK |
| **AT+M2MCM=**5**","**param-name" | | | | OK |
| **AT+M2MCM=**5**."**init-param" | | | | OK |
| **AT+M2MCM=**5, "servlet" | | | | OK |
| **AT+M2MCM=**5**,"**m2m**"** | | | | **+M2MSMI:** 0 |
| **AT+M2MCM=**6 | | | | OK |
| | | *Remarque : fin de la création de la page* | | *Remarque: le message est dans le tampon de sortie ou est envoyé*. |
| *La page entrée est :* | | | | *Lorsque le paramètre de page stockée (voir 3.1) est défini, la* |
| | | | | *page est conservée.* |
| <m2m> | | | | *En mode automatique, la page n'est renvoyée que si elle a été* |
| | <servlet> | | | *modifiée.* |
| | | <servlet-name>test 1</servlet-name> | | |
| | | | | |
| | | <servlet-class>test 2</servlet-class> | | |
| | | | | |
| | | <init-param> | | |
| | | | <param-name id="0.1">test | |
| 3</param-name> | | | | |
| | | </init-param> | | |
| | </servlet> | | | |
| </m2m> | | | | |
| **AT+M2MCM=**8**,"** servelt-name", "New data" | | | | OK |
| | | | | *Remarque: message dans le tampon de sortie modifié* |
| *Remarque : modifier les données associées* à | | | | |
| *l'indicateur « servlet-name » dans la page XML* | | | | |
| *conservée dans le tampon de sortie* | | | | |
| | | | | OK |
| **AT+M2MCM=**7**,** "init- | | | | |
| param", "param-name id","10" | | | | |
| *Remarque modifier la valeur de l'attribut* « *param-name* | | | | |
| *id », associé à l'indicateur* « *init-param » dans la page XML* | | | | |
| *conservée dans le tampon de sortie* | | | | |
| | | | | OK |
| **AT+M2MSM=3** | | | | |
| *Remarque : renvoyer le message conservé* | | | | |
| **AT+M2MCM?** | | | | OK |
| **AT+M2MCM=?** | | | | **+M2MCM:** (0-8) |
| *Remarque* : *valeurs possibles* | | | | OK |

### 2.3.3 Valeurs définies

| | | | |
|---|---|---|---|
| **<ActionType>** | Type d'opération | | |
| | **1** : démarrer la création d'un message XML dans le tampon de | | |
| | sortie | | |
| | **2** : écrire un indicateur de début | | |
| | **3** : écrire un attribut | | |
| | **4** : écrire des données | | |
| | **5** : écrire un indicateur de fin | | |
| | **6** : terminer la création d'une page | | |
| | **7**: modifier une valeur d'attribut d'un message conservé | | |
| | **8** : modifier une valeur de données d'un message conservé | | |
| | Remarque : en cas d'une demande de modification | | |
| | (ActionType 7 et 8), si la taille de la nouvelle valeur est | | |
| | différente de la valeur qu'elle remplace, les parties suivantes | | |
| | du message XML seront déplacées, uniquement s'il reste | | |
| | assez de place dans le tampon ; sinon, un code d'erreur est | | |
| | généré. | | |
| **<Param 1>** | • si <ActionType> = 1 : | | |
| | | o | **0** : l'analyseur syntaxique WBXML n'est pas |
| | | utilisé (le message est envoyé sous forme de texte en | |
| | | clair). | |
| | | o | **1** : l'analyseur syntaxique WBXML est utilisé |
| | | avec la | table de symboles connue, si elle est définie. |
| | | o | **2** : l'analyseur syntaxique WBXML est utilisé |
| | | et l'analyseur syntaxique WBXML va générer la table | |
| | | de compression et l'insérer dans le message. | |
| | • si <ActionType> = 2 : le nom de l'indicateur de début | | |
| | • si <ActionType> = 3 : le nom d'attribut | | |
| | • si <ActionType> = 4 : la valeur des données | | |
| | • si <ActionType> = 5 : le nom de l'indicateur de fin | | |
| | • si <ActionType> = 7 : le nom d'indicateur associé à | | |
| | l'attribut modifié | | |
| | • si <ActionType> = 8 : le nom d'indicateur associé aux | | |
| | données modifiées | | |
| **<Param 2>** | | | |
| | • si <ActionType > = 1 : s'il existe, il s'agit de la référence | | |
| | du message du message de passerelle M2M d'origine | | |
| | demandant une réponse. Le message créé est ainsi un message | | |
| | sollicité (c'est-à-dire la réponse). | | |
| | • si <ActionType> = 3 : la valeur d'attribut | | |
| | • si <ActionType> = 7 : le nom d'attribut modifié | | |
| | • si <ActionType> = 8 : la valeur des nouvelles données | | |
| **<Param 3>** | si <ActionType> = 7 : la valeur du nouvel attribut | | |

### 2.3.4 Codes d'erreur possibles

| | |
|---|---|
| +M2M ERROR: 4000 | La fonction de protocole Wavecom Orange M2M n'est pas activée. Cette erreur est renvoyée lorsque la fonction du protocole Wavecom Orange M2M n'a pas été activée dans le module WISMO. |
| +M2M ERROR 4001 | Opération interdite. Cette erreur est renvoyée lorsqu'un paramètre erroné est détecté ousi le tampon de sortie ne contient aucune page stockée en cas de demande de modification ((<Action Type 7 et 8>) ou si <Action Type 1> n'a pas été appelé avant la demande <Action Type 2 à 6> ou en cas de demande de modification (<Action Type 7 et 8>) si la taille de la nouvelle valeur est différente de celle de la valeur qu'elle remplace, les parties |
| | suivantes du document seront déplacées, uniquement s'il reste assez de place dans le tampon ; sinon, cette erreur est générée. |
| +M2M ERROR 4002 | Opération non prise en charge par la configuration actuelle. |
| +M2M ERROR: 4006 | Client non connecté |
| +M2M ERROR 4010 | Tampon SATURE : le tampon de sortie contient déjà une page stockée ou la création d'une page XML est en cours. |
| +M2M ERROR 4012 | Message XML en texte en clair trop long sur SMS |
| +M2M ERROR: 4013 | Aucun message sollicité sur GPRS. |
| +M2M ERROR: 4014 | Message sollicité non compressé par WBXML |
| +M2M ERROR: 4016 | Indicateur introuvable dans le tampon d'entrée. |
| +M2M ERROR 4017 | Erreur lors de l'analyse syntaxique dans le tampon de sortie (violation des règles XML ou panne d'allocation de mémoire). |
| +M2M ERROR 4019 | Modification du document XML impossible car sa création est en cours. |
| +M2M ERROR4020 | Document XML complètement créé (c'est-à-dire que l'élément racine est fermé). Essayez des opérations de modification (ActionType 7 ou 8). |

### 2.4 Recevoir message +M2MRM

### 2.4.1 Description

Cette commande permet d'effectuer toutes les actions relatives aux messages reçus : recevoir, lire et analyser.

Un message reçu génère une indication +M2MRMI.

Le périphérique demande le téléchargement de tout message entrant attendant d'être regroupé au niveau de la passerelle. Cette commande AT permet d'obtenir les messages arrivés dans la file d'attente de la corbeille d'arrivée.

Cette commande AT n'est disponible que si la valeur 0 n'est pas affectée au paramètre <InboxSize> (Voir commande Paramètres généraux +M2MGSET). Si la taille de la corbeille d'arrivée est définie à 0, les messages seront affichés en indication +M2MRMI en texte en clair.

Cette commande AT permet également d'analyser un message reçu. Dans ce cas, des indicateurs, des attributs et des données sont affichés en indications +M2MPM.

Enfin, cette commande AT permet de lire directement la valeur d'un attribut ou des données dans un message reçu.

### 2.4.2 Syntaxe

| **Commande** | **Réponses possibles** | | | |
|---|---|---|---|---|
| **AT+M2MRM=**<ActionType>,[<param1>,[<param2>,[<param3>]]] | OK | | | |
| | Ou | | | |
| | Codes d'erreur : | | | |
| | +M2M ERROR: 4000 | | | |
| | +M2M ERROR: 4001 | | | |
| | +M2M ERROR: 4002 | | | |
| | +M2M ERROR: 4006 | | | |
| | +M2M ERROR: 4010 | | | |
| | +M2M ERROR: 4011 | | | |
| | +M2M ERROR: 4016 | | | |
| | +M2M ERROR: 4017 | | | |
| | +M2M ERROR: 4018 | | | |
| **AT+M2MRM?** | **+M2MRM:**<Msgld1> | | | |
| *Remarque: renvoyer la liste des messages dans la* | .... | | | |
| *file d'attente de la corbeille d'arrivée* | **+M2MRM:** <Msgldn> | | | |
| | OK | | | |
| **AT+M2MRM=?** | | | | |
| *Remarque : valeurs possibles* | **+M2MRM:** liste des <ActionType> pris en charge | | | |
| | OK | | | |
| **AT+M2MRM?** | **+M2MRM:** 8 | | | |
| | OK | | | |
| *Remarque : obtenir la liste des messages dons la file* | *Remarque : la corbeille d'arrivée contient un message* | | | |
| *d'attente de la corbeille d'arrivée* | | | | |
| **AT+M2MRM=**8.8 | +M2M ERROR: 4001 | | | |
| | *Remarque: opération non autorisée* | | | |
| *Remarque: obtenir le message avec un paramètre* | | | | |
| *<ActionType> erroné* | | | | |
| | <m2m> | | | |
| **AT+M2MRM=**1.8 | | <servlet> | | |
| | | | <servlet-name>test 1</servlet-name> | |
| *Remarque: lire dans la file d'attente de la corbeille* | | | <servlet-class>test 2</servlet-class> | |
| *d'arrivée l'id de message 8.* | | | | |
| | | | <init-param> | |
| | | | | <param-name id="0.1">test 3</param-name> |
| | | | | |
| | | | </init-param> | |
| | | </servlet> | | |
| | </m2m> | | | |
| | <CR><LF>OK | | | |
| **AT+M2MRM?** | OK | | | |
| | *Remarque: la corbeille d'arrivée ne contient aucun message* | | | |
| *Remarque : obtenir la liste des messages dans* | | | | |
| la file d'attente de la *corbeille **d'arrivée*** | | | | |
| **AT+M2MRM**=1,8 | +M2M ERROR: 4011 | | | |
| | *Remarque : message introuvable* | | | |
| *Remarque : obtenir le message avec l'en-tête associé* | | | | |
| **AT+M2MRM**=0 | OK | | | |
| | +M2MRMI: 0,1.0 | | | |
| *Remarque : demander le téléchargement de tous les* | +M2MRMI: 0,2,0 | | | |
| *messages entrants* | +M2MRMI: 0.3.0 | | | |
| | +M2MRMI: 5 | | | |
| | *Remarque: trois messages reçus et présents dans la corbeille* | | | |
| | *d'arrivée* | | | |
| **AT+M2MRM=?** | **+M2MRM:** (0-5) | | | |
| *Remarque : valeurs possibles* | OK | | | |
| **AT+M2MRM=2,1,"param-name","id"** | 0.1 | | | |
| *Remarque : obtenir une valeur d'attribut du message* | <CR><LF>OK | | | |
| 1 | | | | |
| **AT+M2MRM=3,1, "servlet-name"** | test 1 | | | |
| *Remarque : obtenir une valeur de données du* | <CR><LF>OK | | | |
| *message 1* | | | | |
| **AT+M2MRM=4,1** | OK | | | |
| *Remarque: analyser le message I* | **+M2MPMI:** 1,"m2m" | | | |
| | | *Remarque*: *analyser l'indicateur de début* | | |
| | **+M2MPMI**: 1,"servlet" | | | |
| | **+M2MPMI:** 1."servlet-name" | | | |
| | **+M2MPMI:**3,"test l" | | | |
| | | *Remarque: analyser les données* | | |
| | **+M2MPMI:** 4,"'servlet-name" | | | |
| | | *Remarque: analyser l'indicateur de fin* | | |
| | **+M2MPMI:** 1,"servlet-class" | | | |
| | **+M2MPMI**:3, "test 2" | | | |
| | **+M2MPMI:** 4, "servlet-class" | | | |
| | **+M2MPMI:** 1, "init-param" | | | |
| | **+M2MPMI:** 1. "param-name" | | | |
| | **+M2MPMI:** 2, "id", "0.1" | | | |
| | **+M2MPMI:**3, "test 3" | | | |
| | **+M2MPMI:** 4."param-name" | | | |
| | **+M2MPMI:** 4, "init-param" | | | |
| | **+M2MPMI:** 4, "servlet" | | | |
| | **+M2MPMI:** 4,"m2m" | | | |
| | **+M2MPMI:** 5 | | | |
| | *Remarque: le message est terminé* | | | |
| **AT+M2MRM=5,1** | OK | | | |
| *Remarque: effacer le message 1 de la file d'attente* | | | | |
| *de la corbeille d'arrivée* | | | | |
| **AT+M2MRM?** | **+M2MRM: 8** | | | |
| | OK | | | |
| *Remarque: obtenir la liste des messages dans la file* | *Remarque: la corbeille d'arrivée contient un message* | | | |
| *d'attente de la corbeille d'arrivée* | | | | |
| **AT+M2MRM=8,8** | **+M2M ERROR: 4001** | | | |
| | *Remarque: opération non autorisée* | | | |
| *Remarque: obtenir le message avec un paramètre* | | | | |
| *<ActionType> erroné* | | | | |
| | <m2m> | | | |
| **AT+M2MRM=1,8** | | <servlet> | | |
| | | | <servlet-name>test 1</servlet-name> | |
| *Remarque: lire dans la file d'attente de la corbeille* | | | <servlet-class>test 2</servlet-class> | |
| *d'arrivée l'id de message 8.* | | | | |
| | | | <init-param> | |
| | | | | <param-name id="0.1".>test 3</param-name> |
| | | | | |
| | | | </init-param> | |
| | | </servlet> | | |
| | </m2m> | | | |
| | <CR><LF>OK | | | |
| **AT+M2MRM?** | OK | | | |
| | *Remarque: la corbeille d'arrivée ne contient aucun message* | | | |
| *Remarque : obtenir la liste des messages dans* | | | | |
| *la file d'attente de la corbeille d'arrivée* | | | | |
| **AT+M2MRM=1,8** | +M2M ERROR: 4011 | | | |
| | *Remarque : message introuvable* | | | |
| *Remarque: obtenir le message avec l'en-tête associé* | | | | |
| **AT+M2MRM=0** | OK | | | |
| | **+M2MRMI:** 0,1,0 | | | |
| *Remarque: demander le téléchargement de tous les* | +M2MRMI: 0,2,0 | | | |
| *messages entrants* | **+M2MRMI: 0,3,0** | | | |
| | **+M2MRMI: 5** | | | |
| | *Remarque : trois messages reçus et présents dans la corbeille* | | | |
| | *d'arrivée* | | | |
| **AT+M2MRM=?** | **+M2MRM:** (0-5) | | | |
| *Remarque: valeurs possibles* | OK | | | |
| **AT+M2MRM=2,1,"param-name","id"** | 0.1 | | | |
| *Remarque: obtenir une valeur d'attribut du message 1* | <CR><LF>OK | | | |
| **AT+M2MRM=3,1,"servlet-name"** | test 1 | | | |
| *Remarque: obtenir une valeur de données du message 1* | <CR><LF>OK | | | |
| **AT+M2MRM=4,1** | OK | | | |
| *Remarque: analyser le message 1* | **+M2MPMI:** 1, "m2m" | | | |
| | | *Remarque: analyser l'indicateur de début* | | |
| | **+M2MPMI:** 1,"servlet" | | | |
| | **+M2MPMI**: 1,"servlet-name" | | | |
| | **+M2MPMI:** 3," test 1 " | | | |
| | | *Remarque: analyser les données* | | |
| | **+M2MPMI:** 4,"servlet-name" | | | |
| | | *Remarque: analyser l'indicateur de fin* | | |
| | **+M2MPMI:** 1,"servlet-class" | | | |
| | **+M2MPMI**:3,"test 2 " | | | |
| | **+M2MPMI:** 4,"servlet-class" | | | |
| | **+M2MPMI:** 1,"init-param" | | | |
| | **+M2MPMI**: 1,"param-name" | | | |
| | **+M2MPM1:** 2, "id", "0.1 " | | | |
| | **+M2MPMI:** 3,"t est 3 " | | | |
| | **+M2MPMI:** 4."param-name" | | | |
| | **+M2MPMI:** 4, "init-param" | | | |
| | **+M2MPMI:** 4, "servlet" | | | |
| | **+M2MPMI:** 4,"m2m" | | | |
| | **+M2MPMI:** 5 | | | |
| | *Remarque : le message est terminé* | | | |
| **AT+M2MRM=5,1** | OK | | | |
| *Remarque: effacer le message 1 de la file d'attente* | | | | |
| *de la corbeille d'arrivée* | | | | |

### 2.4.3 Valeurs définies

| | |
|---|---|
| **<ActionType>** | Type d'opération |
| | **0** : demander le téléchargement de tout message entrant en |
| | attente de regroupement au niveau de la passerelle (le client |
| | doit être d'abord connecté). Mode manuel uniquement |
| | **1** : obtenir le message <MsgId> en texte en clair et l'effacer |
| | de la file d'attente de la corbeille d'arrivée. |
| | **2** : obtenir une valeur d'attribut du message <MsgId>. |
| | **3** : obtenir la valeur des données dans le message <MsgId>. |
| | **4** : analyser le message <MsgId>. Dans ce cas, des messages |
| | +M2MPMI sont envoyés. |
| | **5** : effacer le message <MsgId>. |
| **<Param 1>** | avec <ActionType> 1,2,3,4 et 5>, paramètre <MsgId> |
| **<Param 2>** | avec <ActionType> 2 et 3>, nom d'indicateur à trouver dans |
| | le <MsgId> XML. Seule la première occurrence est prise en |
| | compte. |
| | |
| **<param 3>** | avec <ActionType> 2, nom d'attribut à trouver. |

### 2.4.4 remarque

Si un message est codé en WBXML et ne peut être décodé en raison d'une erreur, la passerelle reconnaît le message, puis le message est supprimé de la file d'attente de la corbeille d'arrivée. Dans ce cas, l'indication +M2MRMI: 4 est envoyée.

Si la taille d'un message entrant est supérieure à la taille maximale de la file d'attente et si le paramètre <ForcedAcknowledge> est activé (ON), la bibliothèque envoie des accusés de réception de tels messages à la passerelle de message, même s'ils n'ont pas été réellement reçus. Dans ce cas, l'indication +M2MRMI: 3 est envoyée.

### 2.4.5 Codes d'erreur possibles

| | |
|---|---|
| +M2M ERROR: 4000 | La fonction de protocole Wavecom Orange M2M n'est pas activée. Cette erreur est |
| | renvoyée lorsque la fonction du protocole Wavecom Orange M2M n'a pas été activée dans le module WISMO. |
| +M2M ERROR 4001 | Opération interdite. Cette erreur est renvoyée lorsqu'un paramètre erroné est détecté. |
| +M2M ERROR 4002 | Opération non prise en charge par la configuration actuelle. |
| +M2M ERROR: 4006 | Client non connecté |
| +M2M ERROR 4010 | Tampon d'entrée SATURE: le tampon d'entrée contient trop de pages stockées. |
| +M2M ERROR 4011 | Message demandé introuvable dans le tampon d'entrée. |
| +M2M ERROR: 4016 | Indicateur introuvable dans le tampon d'entrée. |
| +M2M ERROR 4017 | Erreur lors de l'analyse du tampon d'entrée (violation des règles XML ou panne d'allocation de mémoire). |
| +M2M ERROR: 4018 | Attribut introuvable dans le tampon d'entrée. |

### 2.5 Administration de protocole +M2MPA

### 2.5.1 Description

Cette commande permet d'effectuer un RESET (réinitialisation) général dans la file d'attente de la corbeille d'arrivée et dans le tampon de la corbeille de départ ou de rétablir les valeurs par défaut de tous les paramètres.

### 2.5.2 Syntaxe

| **Commande** | **Réponses possibles** |
|---|---|
| **AT+M2MPA=<ActionType>** | OK |
| | Ou |
| | +M2M ERROR: 4000 |
| *Remarque: effectuer une action* | +M2M ERROR: 4001 |
| | +M2M ERROR: 4002 |
| **AT+M2MPA?** | **OK** |
| *Remarque: aucun effet* | |
| **AT+M2MPA=?** | **+M2MPA:** (liste des <Action> pris en charge) |
| *Remarque : valeurs possibles* | OK |
| **AT+M2MPA=0** | OK |
| *Remarque: vide la file d'attente de la corbeille d'arrivée* | *Remarque: réinitialisation effectuée* |
| *et le tampon de la corbeille de départ et arrête toutes les* | |
| *transactions en cours* | |
| **AT+M2MPA=2** | +M2M ERROR: 4001 |
| | *Remarque: opération non autorisée* |
| *Remarque: effectuer une action avec un paramètre* | |
| *<ActionType> erroné* | |
| **AT+M2MPA?** | OK |
| *Remarque: aucun effet* | |
| **AT+M2MPA=?** | **+M2MPA:** (0-1) |
| *Remarque: valeurs possibles* | OK |

### 2.5.3 Valeurs définies

| | |
|---|---|
| **<ActionType>** | **0** : RESET (réinitialiser), vide la file d'attente de la corbeille d'arrivée et le tampon de la corbeille de départ et arrête toutes les transactions en cours. |
| | **1** : DEFAULT PARAMETERS (paramètres par défaut). Les valeurs par défaut de tous les paramètres des commandes AT sont rétablies. *Action possible uniquement hors connexion.* |

### 2.5.4 Codes d'erreur possibles

| | |
|---|---|
| +M2M ERROR: 4000 | La fonction de protocole Wavecom Orange M2M n'est pas activée. Cette erreur est renvoyée lorsque la fonction du protocole Wavecom Orange M2M n'a pas été activée dans le module WISMO. |
| +M2M ERROR 4001 | Opération interdite. Cette erreur est renvoyée lorsqu'un paramètre erroné est détecté. |
| +M2M ERROR 4002 | Opération non prise en charge par la configuration actuelle. |

### 3. Indications M2M

Ce chapitre décrit toutes les réponses d'événement de messages envoyées.

### 3.1 Indications de connexion +M2MCONl

Afin de permettre à l'application externe de connaître le statut de connexion, un mécanisme d'indications de connexion *(*+*M2MCONI)* est mis en place.

Ces indications sont envoyées lorsque la valeur du paramètre <NotifyLevel> (voir la commande +M2MGSET) est définie à 1 ou 3.

### Syntaxe : +M2MCONI: <Status>

| **<Status>** | |
|---|---|
| **0** | Fin de la déconnexion demandée. |
| **1** | Connexion établie avec la passerelle |
| **2** | Connexion refusée par la passerelle |
| **3** | Identification rejetée par la passerelle |
| **4** | Connexion perdue avec la passerelle |
| **5** | Réveil SMS reçu |

### 3.2 Indications d'envoi de message +M2MSMI

Afin de permettre à l'application externe de savoir si un message a été envoyé, un mécanisme d'indications de message ***(+M2MSM1)*** est mis en place.

Ces indications sont envoyées lorsque la valeur du paramètre <NotifyLevel> (voir la commande +M2MGSET) est définie à 2 ou 3.

### Syntaxe : +M2MSMI: <Status>,<MsgId>

| **<Status>** | |
|---|---|
| **0** | Le message <MsgId> a été distribué |
| **1** | Le message <MsgId> a été supprimé (toutes les relances ont |
| | échoué) |
| **2** | La transmission du message <MsgId> a échoué. |

| **<MsgId>** | |
|---|---|
| **(0-32767)** | Identification du message |

### 3.3 Indications de réception de message +M2MRMI

Si la taille de la corbeille d'arrivée est de 0, les messages sont affichés avec l'indication +M2MRMI dès leur réception.

Ces indications sont envoyées lorsque la valeur du paramètre <NotifyLevel> (voir la commande +M2MGSET) est définie à 2 ou 3, pendant la réception des messages avec la commande AT+M2MRM ou si un message est reçu en utilisant le support SMS (avec SMS, la passerelle peut envoyer à tout moment un message au périphérique).

### Syntaxe: +M2MRMI: <Status>[,<MsgId>,[,<Bearer>,[<Length>

### <CR><LF>

### <Data>]]

| **<Status>** | |
|---|---|
| **0** | Le message <MsgId> est reçu dans la corbeille d'arrivée. |
| **1** | Message reçu sans corbeille d'arrivée. Le message est |
| | directement acheminé vers la sortie. |
| **2** | Corbeille d'arrivée saturée (la corbeille d'arrivée n'a plus assez |
| | de place pour stocker le message). Le message n'est pas reconnu |
| | et reste stocké au niveau de la passerelle |
| **3** | Aucune capacité pour recevoir un message (la corbeille d'arrivée |
| | n'est pas assez grande pour stocker le message). Si le paramètre |
| | <ForcedAcknowledge> a été activé (ON), le message non reçu |
| | est reconnu. |
| **4** | Message <MsgId> altéré : problème pendant le décodage |
| | WBXML. |
| **5** | Message NMTS (plus rien à envoyer) reçu |
| | |
| **<MsgId>** | Identification du message reçu. **(0-32767)** |
| **<Bearer>** | **0** : message envoyé par GPRS |
| | **1** : message envoyé par SMS |
| **<Length>** | Longueur des données utiles (en octets). |
| **<Data>** | Données du message. |

### 3.4 Indication d'analyse du message +M2MPMI

### Syntaxe: +M2MPMI: <Type>[,<Param1>,[,<Param2>]]

| | |
|---|---|
| **<Type>** | Type d'opération |
| | **0** : lire un indicateur de début |
| | **1** : lire un attribut |
| | **2** : lire des données |
| | **3** : lire un indicateur de fin |
| | **4** : fin du message |
| | **5** : message XML mal formé |
| | **6** : panne d'allocation de mémoire. |
| **<Param 1>** | avec <Type 0>, nom de l'indicateur de début |
| | avec <Type 1>, nom d'attribut |
| | avec <Type 2>, valeur des données |
| | avec <Type 3>, nom de l'indicateur de fin |
| **<Param 2>** | seulement avec <Type 1>, valeur d'attribut. |

### 4. Codes d'erreur

Ce chapitre décrit tous les codes d'erreur renvoyés par les commandes AT M2M.

| **Code d'erreur** | **Signification** |
|---|---|
| **+M2M ERROR: 4000** | La fonction de protocole Wavecom Orange M2M n'est pas activée. Cette erreur est renvoyée lorsque la fonction du protocole Wavecom Orange M2M n'a pas été activée dans le module WISMO. |
| **+M2M ERROR: 4001** | Opération interdite. Cette erreur est renvoyée lorsqu'un paramètre erroné est détecté. |
| **+M2M ERROR: 4002** | Opération non prise en charge par la configuration actuelle. |
| **+M2M ERROR: 4003** | Service déjà connecté |
| **+M2M ERROR: 4004** | Opération de connexion en suspens |
| **+M2M ERROR: 4005** | Opération de déconnexion en suspens |
| **+M2M ERROR: 4006** | Service non connecté |
| **+M2M ERROR: 4007** | Pas de réseau |
| **+M2M ERROR: 4008** | Pas de GPRS |
| **+M2M ERROR: 4009** | Pas de TCP/IP |
| **+M2M ERROR: 4010** | File d'attente saturée |
| **+M2M ERROR: 4011** | Message introuvable |
| **+M2M ERROR: 4012** | Le message XML en texte en clair à envoyer sur SMS est trop long ; il dépasse les 160 octets. |
| **+M2M ERROR: 4013** | Pas de fonction de message sollicité sur GPRS. |
| **+M2M ERROR: 4014** | Le message sollicité n'est pas compressé par WBXML. |
| **+M2M ERROR: 4015** | Aucun message dans la file d'attente. |
| **+M2M ERROR: 4016** | Indicateur introuvable dans le tampon d'entrée. |
| **+M2M ERROR: 4017** | Erreur lors de l'analyse du tampon d'entrée (violation des règles XML ou panne d'allocation de mémoire). |
| **+M2M ERROR: 4018** | Attribut introuvable dans le tampon d'entrée. |
| **+M2M ERROR: 4019** | Impossible de modifier le document XML car il est en cours de création. |
| **+M2M ERROR: 4020** | Document XML entièrement créé (c'est-à-dire que l'élément racine est fermé). Essayez des opérations de modification (ActionType 7 ou 8). |

## Revendications

1. Système de contrôle d'équipements à distance comprenant au moins un serveur, des équipements distants et des moyens de radiocommunication, permettant l'interconnexion entre au moins un serveur et au moins un équipement distant selon un protocole prédéterminé compris par ledit serveur, sans nécessiter de connaissance dudit protocole prédéterminé dans ledit équipement distant,
**caractérisé en ce qu'**il associe à au moins un desdits équipements distants des moyens de radiocommunication capables d'émettre et de recevoir des commandes de type AT émises par et/ou destinées à une application externe mise en oeuvre par ledit équipement distant,
et **en ce que** lesdits moyens de radiocommunication sont dotés d'un jeu de commandes AT spécifiques permettant de gérer des échanges de données entre ledit équipement distant et au moins un serveur mettant en oeuvre ledit protocole prédéterminé,
au moins une desdites commandes AT émise par ladite application externe dudit équipement distant vers les moyens de radiocommunication permettant auxdits moyens de radiocommunication de créer, de modifier et/ou d'envoyer des pages au format XML vers ledit serveur, de façon à permettre une interconnexion entre le ou lesdits serveurs et le ou lesdits équipements distants via lesdits moyens de radiocommunication par transmission de pages au format XML, sans nécessiter de connaissance dudit protocole prédéterminé ni du format XML dans lesdits équipements distants.

2. Système de contrôle d'équipements à distance selon la revendication 1, **caractérisé en ce qu'**au moins une desdites commandes AT permet la compression de données à transmettre.

3. Système de contrôle d'équipements à distance selon la revendication 2, **caractérisé en ce que** ladite compression met en oeuvre le format de compression WBXML.

4. Système de contrôle d'équipements à distance selon l'une quelconque des revendications 1 à 3, **caractérisé en ce que**, au moins dans un premier mode de transmission, lesdites données sont transmises sur un canal dédié aux messages courts (SMS).

5. Système de contrôle d'équipements à distance selon l'une quelconque des revendications 1 à 4, **caractérisé en ce que**, au moins dans un second mode de transmission, lesdites données sont transmises sur un canal GPRS.

6. Système de contrôle d'équipements à distance selon la revendication 5, **caractérisé en ce que**, dans ledit second mode de fonctionnement, il met en oeuvre un protocole « peer-to-peer » , utilisant le protocole TCP.

7. Système de contrôle d'équipements à distance selon la revendication 6, **caractérisé en ce que** ledit protocole « peer-to-peer » est le protocole BEEP.

8. Système de contrôle d'équipements à distance selon l'une quelconque des revendications 1 à 7, **caractérisé en ce qu'**il comprend des moyens de mise en oeuvre, dans un premier mode de fonctionnement, d'un service d'envoi et/ou de réception automatique d'au moins un message XML stocké dans lesdits moyens de radiocommunication, à réception d'un message de réveil.

9. Système de contrôle d'équipements à distance selon la revendication 8, **caractérisé en ce qu'**il présente quatre modes de fonctionnement :
- mode automatique, dans lequel il gère de façon autonome une transaction ;
- mode manuel, dans lequel une transaction doit être initiée par une application distante ;
- mode entrée automatique / sortie manuelle, dans lequel seuls les messages entrants sont traités automatiquement ;
- mode entrée manuelle / sortie automatique, dans lequel un message est envoyé automatiquement.

10. Système de contrôle d'équipements à distance selon l'une quelconque des revendications 1 à 9, **caractérisé en ce qu'**il met en oeuvre des pages XML simplifiées, comprenant uniquement :
- des noms de balise (« tag names ») ;
- des noms d'attribut (« attribute names ») ;
- des valeurs d' attribut (« attribute values ») ; et/ou
- des données.

11. Système de contrôle d'équipements à distance selon l'une quelconque des revendications 1 à 10, **caractérisé en ce que** ledit protocole prédéterminé est un protocole mis en oeuvre dans le cadre d'un service mettant un oeuvre un langage de description données XML, un algorithme de compression desdites données WBXML, une première méthode d'accès à au moins un serveur via GPRS et une seconde méthode d'accès à un second serveur via SMS.

12. Système de contrôle d'équipements à distance selon la revendication 11, **caractérisé en ce que** ledit service est le service « M2M Connect» développé par la Société Orange (marque déposée).

13. Système de contrôle d'équipements à distance selon l'une quelconque des revendications 1 à 12 **caractérisé en ce que** lesdits moyens de radiocommunication intègrent ledit protocole sous la forme d'une application « Open-AT », définissant ledit jeu de commandes AT spécifiques.

14. Système de contrôle d'équipements à distance selon l'une quelconque des revendications 1 à 13 **caractérisé en ce que** ledit jeu de commandes AT spécifiques comprend des commandes permettant :
- la connexion à un desdits serveurs ;
- l'envoi de messages ;
- la réception de messages.

15. Système de contrôle d'équipements à distance selon l'une quelconque des revendications 1 à 14, **caractérisé en ce qu'**au moins certaines desdites commandes AT spécifiques sont organisées de façon à pouvoir assurer au moins deux fonctions et/ou agir sur au moins deux aspects distincts, en fonction d'un paramétrage prédéfini.

16. Système de contrôle d'équipements à distance selon l'une quelconque des revendications 1 à 15, **caractérisé en ce que** ledit jeu de commandes comprend uniquement 8 commandes.

17. Système de contrôle d'équipements à distance selon l'une quelconque des revendications 1 à 16 **caractérisé en ce que** ledit jeu de commandes AT spécifiques comprend au moins une commande de configuration permettant de définir les paramètres de la communication avec un desdits serveurs.

18. Système de contrôle d'équipements à distance selon la revendication 17, **caractérisé en ce qu'**il met en oeuvre une unique commande de configuration (+M2MGSET) pour la configuration générale des aspects liés audit protocole et/ou audit service.

19. Système de contrôle d'équipements à distance selon l'une quelconque des revendications 17 et 18 **caractérisé en ce que** ladite commande de configuration permet de sélectionner un mode de transmission parmi au moins deux (SMS et GPRS).

20. Système de contrôle d'équipements à distance selon l'une quelconque des revendications 17 à 19 **caractérisé en ce que** ladite commande de configuration permet de sélectionner un mode de fonctionnement parmi au moins deux, un mode de fonctionnement automatique et un mode de fonctionnement manuel.

21. Système de contrôle d'équipements à distance selon la revendication 20 **caractérisé en ce que** ladite commande de configuration permet de régler un délai pour la prise en charge d'un message, dans ledit mode de fonctionnement automatique.

22. Système de contrôle d'équipements à distance selon l'une quelconque des revendications 1 à 21 **caractérisé en ce qu'**il met en oeuvre au moins trois commandes de configuration :
- une commande de configuration générale des aspects liés audit protocole et/ou audit service (+M2MGSET) **;**
- une commande de configuration d'une connexion (+M2MCSET), permettant de préciser notamment les coordonnées d'un serveur ;
- une commande de configuration du message de configuration d'une table pour la mise en oeuvre d'un analyseur syntaxique pour la compression (+M2MWBXML) .

23. Système de contrôle d'équipements à distance selon l'une quelconque des revendications 1 à 22, au moins dans un premier mode, lesdits moyens de radiocommunication gèrent uniquement la signalisation d'un échange de données, lesdites données étant transférées directement d'un équipement distant vers un serveur, ou inversement.

24. Système de contrôle d'équipements à distance selon l'une quelconque des revendications 1 à 23 **caractérisé en ce que**, au moins dans un second mode, lesdits moyens de radiocommunication gèrent la signalisation d'un échange de données et le transfert desdites données, ces dernières étant temporairement stockées dans au moins une mémoire tampon.

25. Système de contrôle d'équipements à distance selon la revendication 24, **caractérisé en ce que** la taille de la ou desdites mémoires tampon est paramétrable.

26. Système de contrôle d'équipements à distance selon les revendications 23 et 25, **caractérisé en ce qu'**il fonctionne dans ledit premier mode lorsque la taille de la ou desdites mémoires tampon vaut 0, et dans ledit second mode sinon.

27. Système de contrôle d'équipements à distance selon l'une quelconque des revendications 1 à 26, **caractérisé en ce qu'**il met en oeuvre au moins une commande générale de communication, permettant l'émission et/ou la réception de messages selon ledit protocole prédéterminé.

28. Système de contrôle d'équipements à distance selon la revendication 27, **caractérisé en ce qu'**il met en oeuvre au moins cinq commandes générales de communication :
- une commande de gestion d'une connexion avec un serveur (+M2MCONM) ;
- une commande d'envoi d'un message (+M2MSMSG) ;
- une commande de création et/ou de modification d'un message XML (+M2MCMSG) ;
- une commande de réception d'un message (+M2MRMSG) ;
- une commande d'administration, permettant une mise à zéro et/ou un retour aux valeurs par défaut d'un ensemble de paramètres (+M2MPA).

29. Système de contrôle d'équipements à distance selon l'une quelconque des revendications 27 et 28, **caractérisé en ce qu'**il comprend une commande de création et/ou de modification d'un message XML (+M2MCMSG) permettant d'effectuer au moins certaines des opérations suivantes :
- démarrage de la création d'un message XML dans un tampon de sortie ;
- écriture d'un indicateur de début ;
- écriture d'un attribut ;
- écriture de données ;
- écriture d'un indicateur de fin ;
- fin de création d'une page ;
- modification d'une valeur d'un attribut ;
- modification d'une valeur d'une données,
un paramètre permettant de déterminer le type d'opération à laquelle est affectée ladite commande de création et/ou de modification.

30. Système de contrôle d'équipements à distance selon l'une quelconque des revendications 1 à 29 **caractérisé en ce qu'**il met en oeuvre au moins une commande d'interrogation par une application externe.

31. Système de contrôle d'équipements à distance selon la revendication 30, **caractérisé en ce qu'**il met en oeuvre quatre commandes d'interrogation par une application externe dans un desdits équipements distants, respectivement sur :
- l'état courant de la connexion (+M2MCONI) ;
- l'envoi d'un message (+M2MSMSGI) ;
- la réception d'un message (+M2MRMSGI) ;
- l'analyse syntaxique (« parse ») d'un message (+M2MPMSGI).

32. Procédé de contrôle d'équipements à distance, permettant l'interconnexion entre au moins un serveur et au moins un équipement distant selon un protocole prédéterminé
compris par ledit serveur, sans nécessiter de connaissance dudit protocole prédéterminé dans ledit équipement distant, via des moyens de radiocommunication associés à au moins un desdits équipements distants, ledit procédé **caractérisé par**: émission et réception des commandes de type AT par les moyens de radiocommunication,
émises par et/ou destinées à une application externe mise en oeuvre par ledit équipement distant,
et en ce qu'il met en oeuvre, dans lesdits moyens de radiocommunication, un jeu de commandes AT spécifiques permettant de gérer des échanges de données entre ledit équipement distant et au moins un serveur mettant en oeuvre ledit protocole prédéterminé,
au moins une desdites commandes AT émise par ladite application externe dudit équipement distant vers les moyens de radiocommunication permettant auxdits moyens de radiocommunication de créer, de modifier et/ou d'envoyer des pages au format XML vers ledit serveur, de façon à permettre une interconnexion entre le ou lesdits serveurs et le ou lesdits équipements distants via lesdits moyens de radiocommunication par transmission de pages au format XML, sans nécessiter de connaissance dudit protocole prédéterminé ni du format XML dans lesdits équipements distants.

33. Dispositif de radiocommunication **caractérisé en ce qu'**il comprend des moyens de radiocommunication mis en oeuvre dans un système de contrôle d'équipements à distance, lesdits moyens de radiocommunication capables d'émettre et de recevoir de commandes de type AT émises par et/ou destinées à une application externe mise en ouvre par ledit équipement distant, et lesdits moyens de radiocommunication dotés d'un jeu de commandes AT spécifiques permettant de gérer des échanges de données entre ledit équipement distant et au moins un serveur mettant en ouvre un protocole prédéterminé, et au moins une desdites commandes AT, émise par ladite application externe dudit équipement distant vers les moyens de radiocommunication permettant aux dits moyens de radiocommunication de créer, de modifier et/ou d'envoyer des pages au format XML vers ledit serveur, de façon a permettre une interconnexion entre les ou lesdits serveurs et ou lesdits équipements distants via lesdits moyens de radiocommunication par transmission des pages au format XML

34. Module de radiocommunication **caractérisé en ce qu'**il comprend des moyens de radiocommunication mis en oeuvre dans un système de contrôle d'équipements à distance, lesdits moyens de radiocommunication capables d'émettre et de recevoir de commandes de type AT émises par et/ou destinées à une application externe mise en ouvre par ledit équipement distant, et lesdits moyens de radiocommunication dotés d'un jeu de commandes AT spécifiques permettant de gérer des échanges de données entre ledit équipement distant et au moins un serveur mettant en ouvre un protocole prédéterminé, et au moins une desdites commandes AT, émise par ladite application externe dudit équipement distant vers les moyens de radiocommunication permettant aux dits moyens de radiocommunication de créer, de modifier et/ou d'envoyer des pages au format XML vers ledit serveur, de façon a permettre une interconnexion entre les ou lesdits serveurs et ou lesdits équipements distants via lesdits moyens de radiocommunication par transmission des pages au format XML

35. Programme informatique **caractérisé en ce qu'** il comprend des instructions de programmation permettant la mise en oeuvre de commandes de type AT dans un équipement distant et/ou dans des moyens de radiocommunication d'un système de contrôle d'équipements à distance lesdits moyens de radiocommunication capables d'émettre et de recevoir de commandes de type AT émises par et/ou destinées à une application externe mise en ouvre par ledit équipement distant, et lesdits moyens de radiocommunication dotés d'un jeu de commandes AT spécifiques permettant de gérer des échanges de données entre ledit équipement distant et au moins un serveur mettant en ouvre un protocole prédéterminé, et au moins une desdites commandes AT, émise par ladite application externe dudit équipement distant vers les moyens de radiocommunication permettant aux dits moyens de radiocommunication de créer, de modifier et/ou d'envoyer des pages au format XML vers ledit serveur, de façon a permettre une interconnexion entre les ou lesdits serveurs et ou lesdits équipements distants via lesdits moyens de radiocommunication par transmission des pages au format XML

## Claims

1. Remote equipment control system comprising at least one server, remote equipment and radio communication means, allowing interconnection between at least one server and at least one piece of remote equipment according to a preset protocol understood by said server, without requiring knowledge of said preset protocol in said piece of remote equipment, **characterised in that** it associates with at least one of said pieces of remote equipment radio communication means capable of sending and receiving AT commands sent by and/or intended for an external application employed by said piece of remote equipment,
and **in that** said radio communication means are equipped with a set of specific AT commands allowing data exchanges to be managed between said piece of remote equipment and at least one server employing said preset protocol,
at least one of said AT commands sent by said external application from said piece of remote equipment to the radio communication means allowing said radio communication means to create, modify and/or send pages in the XML format to said server, so as to allow an interconnection between said server or servers and said piece or pieces of remote equipment via said radio communication means by transmitting pages in the XML format, without requiring knowledge of said preset protocol or of the XML format in said pieces of remote equipment.

2. Remote equipment control system according to claim 1, **characterised in that** at least one of said AT commands allows data for transmission to be compressed.

3. Remote equipment control system according to claim 2, **characterised in that** said compression employs the WBXML compression format.

4. Remote equipment control system according to any one of claims 1 to 3, **characterised in that**, at least in a first transmission mode, said data is transmitted on a channel dedicated to short messages (SMS).

5. Remote equipment control system according to any one of claims 1 to 4, **characterised in that**, at least in a second transmission mode, said data is transmitted on a GPRS channel.

6. Remote equipment control system according to claim 5, **characterised in that**, in said second operating mode, it employs a "peer-to-peer" protocol, using the TCP protocol.

7. Remote equipment control system according to claim 6, **characterised in that** said "peer-to-peer" protocol is the BEEP protocol.

8. Remote equipment control system according to any one of claims 1 to 7, **characterised in that** it comprises means for the employment, in a first operating mode, of a service for the automatic sending and/or receiving of at least one XML message stored in said radio communication means, on receipt of a wake-up message.

9. Remote equipment control system according to claim 8, **characterised in that** it has four operating modes:
- automatic mode, in which it manages a transaction autonomously;
- manual mode, in which a transaction must be initiated by a remote application;
- automatic input/manual output mode, in which only incoming messages are processed automatically;
- manual input/automatic output mode, in which a message is sent automatically.

10. Remote equipment control system according to any one of claims 1 to 9, **characterised in that** it employs simplified XML pages, comprising only:
- tag names;
- attribute names;
- attribute values; and/or
- data.

11. Remote equipment control system according to any one of claims 1 to 10, **characterised in that** said preset protocol is a protocol employed as part of a service that employs an XML data description language, an algorithm for the compression of said WBXML data, a first method of access to at least one server via GPRS and a second method of access to a second server via SMS.

12. Remote equipment control system according to claim 1, **characterised in that** said service is the "M2M Connect" service developed by the Orange Company (trademark).

13. Remote equipment control system according to any one of claims 1 to 12, **characterised in that** said radio communication means incorporate said protocol in the form of an "Open-AT" application, defining said set of specific AT commands.

14. Remote equipment control system according to any one of claims 1 to 13, **characterised in that** said set of specific AT commands comprises commands that allow:
- connection to one of said servers;
- sending of messages;
- receipt of messages.

15. Remote equipment control system according to any one of claims 1 to 14, **characterised in that** at least some of said specific AT commands are organised so as to be able to fulfil at least two functions and/or to act on at least two different aspects, as a function of a preset parameterisation.

16. Remote equipment control system according to any one of claims 1 to 15, **characterised in that** said set of controls comprises only 8 controls.

17. Remote equipment control system according to any one of claims 1 to 16, **characterised in that** said set of specific AT commands comprises at least one configuration command allowing the parameters of the communication with one of said servers to be defined.

18. Remote equipment control system according to claim 17, **characterised in that** it employs a single configuration command (+M2MGSET) for the general configuration of aspects related to said protocol and/or to said service.

19. Remote equipment control system according to any one of claims 17 and 18 **characterised in that** said configuration command allows one transmission mode to be selected from at least two (SMS and GPRS).

20. Remote equipment control system according to any one of claims 17 to 19 **characterised in that** said configuration command allows one operating mode to be selected from at least two, an automatic operating mode and a manual operating mode.

21. Remote equipment control system according to claim 20 **characterised in that** said configuration command allows a message handling time to be set, in said automatic operating mode.

22. Remote equipment control system according to any one of claims 1 to 21 **characterised in that** it employs at least three configuration commands:
- a command for the general configuration of aspects related to said protocol and/or to said service (+M2MGSET);
- a command for the configuration of a connection (+M2MCSET), allowing in particular the server coordinates to be specified;
- a command for configuring the configuration message of a table for the implementation of a syntactic analyser for compression (+M2MWBXML).

23. Remote equipment control system according to any one of claims 1 to 22, at least in a first mode, said radio communication means manage only the signalling of a data exchange, said data being transferred directly from a piece of remote equipment to a server, or vice versa.

24. Remote equipment control system according to any one of claims 1 to 23, **characterised in that**, at least in a second mode, said radio communication means manage the signalling of a data exchange and the transfer of said data, the latter being temporarily stored in at least one buffer memory.

25. Remote equipment control system according to claim 24, **characterised in that** the size of said buffer memory or buffer memories can be parameterised.

26. Remote equipment control system according to claims 23 and 25, **characterised in that** it operates in said first mode when the size of said buffer memory or buffer memories is equal to 0, and in said second mode otherwise.

27. Remote equipment control system according to any one of claims 1 to 26, **characterised in that** it employs at least one general communication command, allowing messages to be sent and/or received according to said preset protocol.

28. Remote equipment control system according to claim 27, **characterised in that** it employs at least five general communication commands:
- a command for the management of a connection with a server (+M2MCONM);
- a command for a message to be sent (+M2MSMSG);
- a command for an XML message to be created and/or modified (+M2MCMSG);
- a command for a message to be received (+M2MFtM8G);
- an administration command, allowing a set of parameters to be set to zero and/or returned to the default values (+M2MPA).

29. Remote equipment control system according to either one of claims 27 and 28 **characterised in that** it comprises a command for the creation and/or modification of an XML message (+M2MCMSG) allowing at least some of the following operations to be performed:
- starting the creation of an XML message in an output buffer;
- writing a start indicator;
- writing an attribute;
- writing data;
- writing an end indicator;
- end of page creation;
- modifying an attribute value;
- modifying a data item value;
a parameter allowing determination of the type of operation to which said creation and/or modification command is attributed.

30. Remote equipment control system according to any one of claims 1 to 29, **characterised in that** it employs at least one command for interrogation by an external application.

31. Remote equipment control system according to claim 30, **characterised in that** it employs four commands for interrogation by an external application in one of said pieces of remote equipment, in relation respectively to:
- the current state of the connection (+M2MCONI);
- the sending of a message (+M2MSMSGI);
- the receipt of a message (+M2MRMSGI);
- the syntactic analysis ("parsing") of a message (+M2MPMSGI).

32. Method for controlling remote equipment, allowing interconnection between at least one server and at least one piece of remote equipment according to a preset protocol understood by said server, without requiring any knowledge of said preset protocol in said piece of remote equipment, via radio communication means associated with at least one of said pieces of remote equipment, said method **characterised by** sending and receiving by radio communication means AT commands sent by and/or intended for an external application employed by said piece of remote equipment, and in that it employs, in said radio communication means, a set of specific AT commands allowing data exchanges to be managed between said piece of remote equipment and at least one server employing said preset protocol, at least one of said AT commands sent by said external application from said piece of remote equipment to the radio communication means allowing said radio communication means to create, modify and/or send pages in the XML format to said server, so as to allow an interconnection between said server or servers and said piece or pieces of remote equipment via said radio communication means by transmitting pages in the XML format, without requiring knowledge of said preset protocol or of the XML format in said pieces of remote equipment.

33. Radio communication device **characterised** that it comprises radio communication means employed in a remote equipment control system, said radio communication means capable of sending and receiving AT commands sent by and/or intended for an external application employed by said piece of remote equipment, and said radio communication means equipped with a set of specific AT commands allowing data exchanges to be managed between said piece of remote equipment and at least one server employing a preset protocol, and at least one of said AT commands, sent by said external application from said piece of remote equipment to the radio communication means allowing said radio communication means to create, modify and/or send pages in the XML format to said server, so as to allow an interconnection between the or said servers and/or said pieces of remote equipment via said radio communication means by transmitting pages in the XML format.

34. Radio communication module **characterised in that** it comprises radio communication means employed in a remote equipment control system, said radio communication means capable of sending and receiving AT commands sent by and/or intended for an external application employed by said piece of remote equipment, and said radio communication means equipped with a set of specific AT commands allowing data exchanges to be managed between said piece of remote equipment and at least one server employing a preset protocol, and at least one of said AT commands, sent by said external application from said piece of remote equipment to the radio communication means allowing said radio communication means to create, modify and/or send pages in the XML format to said server, so as to allow an interconnection between the or said servers and/or said pieces of remote equipment via said radio communication means by transmitting pages in the XML format.

35. Computer program **characterised in that** it comprises programming instructions allowing AT commands to be employed in a piece of remote equipment and/or in radio communication means of a remote equipment control system, said radio communication means capable of sending and receiving AT commands sent by and/or intended for an external application employed by said piece of remote equipment, and said radio communication means equipped with a set of specific AT commands allowing data exchanges to be managed between said piece of remote equipment and at least one server employing a preset protocol, and at least one of said AT commands, sent by said external application from said piece of remote equipment to the radio communication means allowing said radio communication means to create, modify and/or send pages in the XML format to said server, so as to allow an interconnection between the or said servers and/or said pieces of remote equipment via said radio communication means by transmitting pages in the XML format.

## Patentansprüche

1. System zur Fernüberwachung von Geräten, das mindestens einen Server, abgesetzte Geräte und Funkkommunikationsmitfel umfasst und die Verbindung zwischen mindestens einem Server und mindestens einem abgesetzten Gerät nach einem vorgegebenen, von diesem Server verstandenen Protokoll ermöglicht, ohne Kenntnisse dieses vorgegebenen Protokolls seitens des abgesetzten Gerätes zu erfordern,
**dadurch gekennzeichnet, dass** mindestens eines der abgesetzten Geräte mit Funkkommunikationsmitteln kombiniert wird, die in der Lage sind, AT-Befehle zu senden und zu empfangen, welche von einer externen Anwendung, die von dem abgesetzten Gerät eingesetzt wird, gesendet werden und/oder an dieses gerichtet sind,
und dass diese Funkkommunikationsmittel mit einem Satz spezieller AT-Befehle ausgestattet sind, die es ermöglichen, den Datenaustausch zwischen dem abgesetzten Gerät und mindestens einem Server, der das vorgegebene Protokoll einsetzt, zu steuern,
wobei mindestens einer der AT-Befehle, die von der externen Anwendung des abgesetzten Geräts an die Funkkommunikationsmittel gesendet werden, es den Funkkommunikationsmitteln ermöglicht, Seiten im Format XML zu erstellen, zu ändern und/oder an den Server zu senden, so dass eine Verbindung zwischen dem Server oder den Servern und dem abgesetzten Gerät oder den abgesetzten Geräten über die Funkkommunikationsmittel durch Übertragung von Seiten im Format XML ermöglicht wird, ohne Kenntnisse des vorgegebenen Protokolls oder des Formats XML in den abgesetzten Geräten zu erfordern.

2. System zur Fernüberwachung von Geräten nach Anspruch 1,
**dadurch gekennzeichnet, dass** mindestens einer der AT-Befehle die Komprimierung von zu übertragenden Daten ermöglicht.

3. System zur Fernüberwachung von Geräten nach Anspruch 2,
**dadurch gekennzeichnet, dass** diese Komprimierung das Komprimierungsformat WBXLM einsetzt.

4. System zur Fernüberwachung von Geräten nach einem beliebigen der Ansprüche 1 bis 3,
**dadurch gekennzeichnet, dass** die Daten mindestens in einer ersten übertragungsbetriebsart über einen dedizierten Kurzmeldungskanal (SMS) übertragen werden.

5. System zur Fernüberwachung von Geräten nach einem beliebigen der Ansprüche 1 bis 4,
**dadurch gekennzeichnet, dass** die Daten mindestens in einer zweiten Übertragungsbetriebsart über einen GPRS-Kanal übertragen werden.

6. System zur Fernüberwachung von Geräten nach Anspruch 5,
**dadurch gekennzeichnet, dass** es in der zweiten Betriebsart ein Peer-to-Peer-Protokoll unter Verwendung des Protokolls TCP einsetzt.

7. System zur Fernüberwachung von Geräten nach Anspruch 6,
**dadurch gekennzeichnet, dass** es sich bei dem Peer-to-Peer-Protokoll um das Protokoll BEEP handelt.

8. System zur Fernüberwachung von Geräten nach einem beliebigen der Ansprüche 1 bis 7,
**dadurch gekennzeichnet, dass** es Mittel umfasst, die in einer ersten Betriebsart beim Empfangen einer Wakeup-Nachricht den Dienst des automatischen Sendens und/oder Empfangens von mindestens einer in den Funkkommunikationsmitteln gespeicherten XML-Nachricht ausführen.

9. System zur Fernüberwachung von Geräten nach Anspruch 8,
**dadurch gekennzeichnet, dass** es vier Betriebsarten aufweist:
- automatischen Betrieb, bei dem es eine Transaktion selbstständig steuert;
- manuellen Betrieb, bei dem eine Transaktion von einer abgesetzten Anwendung initiiert werden muss;
- Betriebsart der automatischen Eingabe / manuellen Ausgabe, in der die eingehenden Nachrichten automatisch verarbeitet werden;
- Betriebsart der manuellen Eingabe / automatischen Ausgabe, in der eine Nachricht automatisch gesendet wird.

10. System zur Fernüberwachung von Geräten nach einem beliebigen der Ansprüche 1 bis 9,
**dadurch gekennzeichnet, dass** es vereinfachte XML-Seiten einsetzt, die nur umfassen:
- Tag-Namen ("tag names");
- Attribut-Namen ("attribute names");
- Attribut-Werte ("attribute values"); und/oder
- Daten.

11. System zur Fernüberwachung von Geräten nach einem beliebigen der Ansprüche 1 bis 10,
**dadurch gekennzeichnet, dass** das vorgegebene Protokoll ein Protokoll ist, das im Rahmen eines Dienstes eingesetzt wird, der die Datenbeschreibungssprache XML, den Datenkomprimierungsalgorithmus WBXML, eine erste Zugangsmethode zu mindestens einem Server über GPRS und eine zweite Zugangsmethode zu einem zweiten Server über SMS einsetzt.

12. System zur Fernüberwachung von Geräten nach Anspruch 1,
**dadurch gekennzeichnet, dass** es sich bei dem Dienst um den Dienst "M2M Connect" handelt, der vom Unternehmen Orange (eingetragene Marke) entwickelt wurde.

13. System zur Fernüberwachung von Geräten nach einem beliebigen der Ansprüche 1 bis 12,
**dadurch gekennzeichnet, dass** die Funkkommunikationsmittel dieses Protokoll in Form einer Open-AT-Anwendung beinhalten, die den Satz spezieller AT-Befehle definiert.

14. System zur Fernüberwachung von Geräten nach einem beliebigen der Ansprüche 1 bis 13,
**dadurch gekennzeichnet, dass** der Satz spezieller AT-Befehle Befehle umfasst, die Folgendes ermöglichen:
- den Verbindungsaufbau zu einem der Server;
- das Senden von Nachrichten;
- das Empfangen von Nachrichten.

15. System zur Fernüberwachung von Geräten nach einem beliebigen der Ansprüche 1 bis 14,
**dadurch gekennzeichnet, dass** mindestens einige der speziellen AT-Befehle so organisiert sind, dass sie in Abhängigkeit von einer vorher festgelegten Parametrierung mindestens zwei Funktionen ausführen können und/oder auf mindestens zwei verschiedene Aspekte einwirken können.

16. System zur Fernüberwachung von Geräten nach einem beliebigen der Ansprüche 1 bis 15,
**dadurch gekennzeichnet, dass** der Befehlssatz nur 8 Befehle umfasst.

17. System zur Fernüberwachung von Geräten nach einem beliebigen der Ansprüche 1 bis 16,
**dadurch gekennzeichnet, dass** der Satz spezieller AT-Befehle mindestens einen Konfigurationsbefehl umfasst, der es ermöglicht, die Parameter der Verbindung zu einem der Server zu definieren.

18. System zur Fernüberwachung von Geräten nach Anspruch 17,
**dadurch gekennzeichnet, dass** es einen einzigen Konfigurationsbefehl (+M2MGSET) zur allgemeinen Konfiguration der mit dem Protokoll und/oder dem Dienst zusammenhängenden Aspekte einsetzt.

19. System zur Fernüberwachung von Geräten nach einem beliebigen der Ansprüche 17 und 18,
**dadurch gekennzeichnet, dass** dieser Konfigurationsbefehl es ermöglicht, eine von mindestens zwei Übertragungsbetriebsarten (SMS und GPRS) auszuwählen.

20. System zur Fernüberwachung von Geräten nach einem beliebigen der Ansprüche 17 bis 19,
**dadurch gekennzeichnet, dass** dieser Konfigurationsbefehl es ermöglicht, eine von mindestens zwei Betriebsarten, einer automatischen Betriebsart und einer manuellen Betriebsart, auszuwählen.

21. System zur Fernüberwachung von Geräten nach Anspruch 20,
**dadurch gekennzeichnet, dass** dieser Konfigurationsbefehl es ermöglicht, eine Zeit für die Übernahme einer Nachricht in der automatischen Betriebsart einzustellen.

22. System zur Fernüberwachung von Geräten nach einem beliebigen der Ansprüche 1 bis 21,
**dadurch gekennzeichnet, dass** es mindestens drei Konfigurationsbefehfe einsetzt:
- einen Befehl zur allgemeinen Konfiguration der mit dem Protokoll und/oder dem Dienst zusammenhängenden Aspekte (+M2MGSET);
- einen Befehl zur Konfiguration des Verbindungsaufbaus (+M2MCSET), der es ermöglicht, die Adressangaben eines Servers anzugeben;
- einen Befehl zur Konfiguration der Nachricht zur Konfiguration einer Tabelle für den Einsatz eines Syntaxanalysators für die Komprimierung (+M2MWBXML).

23. System zur Fernüberwachung von Geräten nach einem beliebigen der Ansprüche 1 bis 22,
**dadurch gekennzeichnet, dass** die Funkkommunikationsmittel zumindest in einer ersten Betriebsart nur die Signalisierung eines Datenaustausches steuern, wobei die Daten von einem abgesetzten Gerät direkt zu einem Server oder umgekehrt übertragen werden.

24. System zur Fernüberwachung von Geräten nach einem beliebigen der Ansprüche 1 bis 23,
**dadurch gekennzeichnet, dass** die Funkkommunikationsmittel zumindest in einer zweiten Betriebsart die Signalisierung eines Datenaustausches und die Übertragung dieser Daten steuern, wobei Letztere in mindestens einem Pufferspeicher zwischengespeichert werden.

25. System zur Fernüberwachung von Geräten nach Anspruch 24,
**dadurch gekennzeichnet, dass** die Größe des Pufferspeichers oder der Pufferspeicher parametrierbar ist.

26. System zur Fernüberwachung von Geräten nach den Ansprüchen 23 und 25,
**dadurch gekennzeichnet, dass** es, wenn die Größe des Pufferspeichers oder der Pufferspeicher gleich Null ist, in der ersten Betriebsart und ansonsten in der zweiten Betriebsart arbeitet.

27. System zur Fernüberwachung von Geräten nach einem beliebigen der Ansprüche 1 bis 26,
**dadurch gekennzeichnet, dass** es mindestens einen allgemeinen Kommunikationsbefehl einsetzt, der das Senden und/oder Empfangen von Nachrichten nach dem vorgegebenen Protokoll ermöglicht.

28. System zur Fernüberwachung von Geräten nach Anspruch 27,
**dadurch gekennzeichnet, dass** es mindestens fünf allgemeine Kommunikationsbefehle einsetzt:
- einen Befehl zur Steuerung des Verbindungsaufbaus zu einem Server (+M2MCONM);
- einen Befehl zum Senden einer Nachricht (+M2MSMSG);
- einen Befehl zum Erstellen und/oder Ändern einer XML-Nachricht (+M2MCMSG);
- einen Befehl zum Empfangen einer Nachricht (+M2MRMSG);
- einen Administrationsbefehl, der das Zurücksetzen der Werte einer Parametergruppe auf Null und/oder auf die Standardwerte ermöglicht (+M2MPA).

29. System zur Fernüberwachung von Geräten nach einem beliebigen der Ansprüche 27 und 28,
**dadurch gekennzeichnet, dass** es einen Befehl zum Erstellen und/oder Ändern einer XML-Nachricht (+M2MCMSG) umfasst, der es ermöglicht, mindestens einige der folgenden Vorgänge auszuführen:
- Beginn der Erstellung einer XML-Nachricht in einem Ausgabepuffer;
- Schreiben eines Beginnzeichens;
- Schreiben eines Attributs;
- Schreiben von Daten;
- Schreiben eines Endezeichens;
- Ende des Erstellens einer Seite;
- Ändern eines Attributwerts;
- Ändern eines Datenwerts,
wobei ein Parameter es ermöglicht, die Vorgangsart zu bestimmen, der dieser Befehl zum Erstellen und/oder Ändern zugewiesen wird.

30. System zur Fernüberwachung von Geraten nach einem beliebigen der Ansprüche 1 bis 29,
**dadurch gekennzeichnet, dass** es mindestens einen Befehl zur Abfrage durch eine externe Anwendung einsetzt.

31. System zur Fernüberwachung von Geräten nach Anspruch 30,
**dadurch gekennzeichnet, dass** es vier Befehle zur Abfrage durch eine externe Anwendung in einem der abgesetzten Geräte einsetzt, die Folgendes betreffen:
- den aktuellen Verbindungsstatus (+M2MCONI);
- das Senden einer Nachricht (+M2MSMSGI);
- das Empfangen einer Nachricht (+M2MRMSGI);
- die Syntaxanalyse ("Parse") einer Nachricht (+M2MPMSGI).

32. Verfahren zur Fernüberwachung von Geräten, das die Verbindung zwischen mindestens einem Server und mindestens einem abgesetzten Gerät nach einem vorgegebenen, von diesem Server verstandenen Protokoll ermöglicht, ohne Kenntnisse des vorgegebenen Protokolls im abgesetzten Gerät zu erfordern, über Funkkommunikationsmittel, die mit mindestens einem der abgesetzten Geräte kombiniert sind.
wobei dieses Verfahren **gekennzeichnet ist durch** das Senden und Empfangen der AT-Befehle **durch** die Funkkommunikationsmittel, die von einer externen Anwendung des abgesetzten Geräts gesendet werden und/oder an diese gerichtet sind, und **dadurch**, dass es in diesen Funkkommunikationsmitteln einen Satz spezieller AT-Befehle einsetzt, die es ermöglichen, den Datenaustausch zwischen dem abgesetzten Gerät und mindestens einem Server, der das vorgegebene Protokoll einsetzt, zu steuern,
wobei mindestens einer der AT-Befehle, die von der externen Anwendung des abgesetzten Geräts an die Funkkommunikationsmittel gesendet werden, es den Funkkammunikationsmitteln ermöglicht, Seiten im Format XML zu erstellen, zu ändern und/oder an den Server zu senden, so dass eine Verbindung zwischen dem Server oder den Servern und dem abgesetzten Gerät oder den abgesetzten Geräten über die Funkkommunikationsmittel **durch** Übertragung von Seiten im Format XML ermöglicht wird, ohne Kenntnisse des vorgegebenen Protokolls oder des Formats XML in den abgesetzten Geräten zu erfordern.

33. Funkkommunikationsvorrichtung,
**dadurch gekennzeichnet, dass** sie Funkkommunikationsmittel umfasst, die in einem System zur Fernüberwachung von Geräten eingesetzt werden, wobei diese Funkkommunikationsmittel in der Lage sind, AT-Befehle zu senden und zu empfangen, die von einer externen Anwendung, die von dem abgesetzten Gerät eingesetzt wird, gesendet werden und/oder an diese gerichtet sind, und dass die Funkkommunikationsmittel mit einem Satz spezieller AT-Befehle ausgestattet sind, die es ermöglichen, den Datenaustausch zwischen dem abgesetzten Gerät und mindestens einem Server zu steuern, der ein vorgegebenes Protokoll einsetzt, und dass mindestens einer der AT-Befehle, die von der externen Anwendung des abgesetzten Geräts an die Funkkommunikationsmittel gesendet werden, es den Funkkommunikationsmitteln ermöglicht, Seiten im Format XML zu erstellen, zu ändern und/oder an diesen Server zu senden, so dass eine Verbindung zwischen dem Server oder den Servern und dem abgesetzten Gerät oder den abgesetzten Geräten über diese Funkkommunikationsmittel durch Übertragung der Seiten im Format XML ermöglicht wird.

34. Funkkommunikationsmodul,
**dadurch gekennzeichnet, dass** es Funkkommunikationsmittel umfasst, die in einem System zur Fernüberwachung von Geräten eingesetzt werden, wobei diese Funkkommunikationsmittel in der Lage sind, AT-Befehle zu senden und zu empfangen, die von einer externen Anwendung, die von dem abgesetzten Gerät eingesetzt wird, gesendet werden und/oder an diese gerichtet sind, und dass die Funkkommunikationsmittel mit einem Satz spezieller AT-Befehle ausgestattet sind, die es ermöglichen, den Datenaustausch zwischen dem abgesetzten Gerät und mindestens einem Server zu steuern, der ein vorgegebenes Protokoll einsetzt, und dass mindestens einer der AT-Befehle, die von der externen Anwendung des abgesetzten Geräts an die Funkkommunikationsmittel gesendet werden, es den Funkkommunikationsmitteln ermöglicht, Seiten im Format XML zu erstellen, zu ändern und/oder an diesen Server zu senden, so dass eine Verbindung zwischen dem Server oder den Servern und dem abgesetzten Gerät oder den abgesetzten Geräten über diese Funkkommunikationsmittel durch Übertragung der Seiten im Format XML ermöglicht wird.

35. Computerprogramm,
**dadurch gekennzeichnet, dass** es Programmieranweisungen umfasst, die den Einsatz von AT-Befehlen in einem abgesetzten Gerät und/oder in Funkkommunikationsmitteln eines Systems zur Fernüberwachung von Geräten ermöglichen,
wobei diese Funkkommunikationsmittel in der Lage sind, AT-Befehle zu senden und zu empfangen, die von einer externen Anwendung, die von dem abgesetzten Gerät eingesetzt wird, gesendet werden und/oder an diese gerichtet sind, und dass die Funkkommunikationsmittel mit einem Satz spezieller AT-Befehle ausgestattet sind, die es ermöglichen, den Datenaustausch zwischen dem abgesetzten Gerät und mindestens einem Server zu steuern, der ein vorgegebenes Protokoll einsetzt, und dass mindestens einer der AT-Befehle, die von der externen Anwendung des abgesetzten Geräts an die Funkkommunikationsmittel gesendet werden, es den Funkkommunikationsmitteln ermöglicht, Seiten im Format XML zu erstellen, zu ändern und/oder an diesen Server zu senden, so dass eine Verbindung zwischen dem Server oder den Servern und dem abgesetzten Gerät oder den abgesetzten Geräten über diese Funkkommunikationsmittel durch Übertragung der Seiten im Format XML ermöglicht wird.
